(19) Europäisches Patentamt
European Patent Office
Office européen des brevets

(11) **EP 4 641 251 A1**

(12) **EUROPEAN PATENT APPLICATION**
published in accordance with Art. 153(4) EPC

(43) Date of publication:
**29.10.2025 Bulletin 2025/44**

(21) Application number: **23906319.1**

(22) Date of filing: **26.06.2023**

(51) International Patent Classification (IPC):
$G01S\ 7/481^{(2006.01)}$    $G01C\ 3/06^{(2006.01)}$
$G01S\ 7/497^{(2006.01)}$    $G01S\ 17/10^{(2020.01)}$
$G02B\ 7/40^{(2021.01)}$    $G03B\ 17/14^{(2021.01)}$
$H04N\ 23/60^{(2023.01)}$

(52) Cooperative Patent Classification (CPC):
**G01C 3/06; G01S 7/481; G01S 7/497; G01S 17/10;
G02B 7/40; G03B 17/14; H04N 23/60**

(86) International application number:
**PCT/JP2023/023468**

(87) International publication number:
**WO 2024/134933 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 JP 2022205108**

(71) Applicant: **JVCKenwood Corporation
Yokohama-shi, Kanagawa 2210022 (JP)**

(72) Inventors:
• **KOBAYASHI Toshihide
Yokohama-shi, Kanagawa 221-0022 (JP)**
• **MASUDA Shogo
Yokohama-shi, Kanagawa 221-0022 (JP)**

(74) Representative: **Klang, Alexander H.
Wagner & Geyer Partnerschaft mbB
Patent- und Rechtsanwälte
Gewürzmühlstrasse 5
80538 München (DE)**

(54) **DISTANCE INFORMATION ACQUISITION DEVICE**

(57) A distance information acquisition device includes an irradiation unit configured to irradiate an object with light and a time of flight (ToF) sensor configured to receive light emitted from the irradiation unit and reflected by the object via an optical-system lens and acquires distance information for the object. The distance information acquisition device further includes: a distance value acquiring unit configured to acquire a distance value on the basis of a timing at which emission of light is performed by the irradiation unit, a timing at which light is received by the ToF sensor, and the speed of light; a storage unit configured to store a predetermined numerical expression including at least information on an angle of view of the optical-system lens as a parameter; and a correcting arithmetic operation unit configured to calculate the distance information for the object by applying the acquired distance value to the predetermined numerical expression stored in the storage unit.

FIG. 3

EP 4 641 251 A1

**Description**

TECHNICAL FIELD

The present invention relates to a distance information acquisition device.

Priority is claimed on Japanese Patent Application No. 2022-205108, filed December 22, 2022, the content of which is incorporated herein by reference.

BACKGROUND

In the related art, a device that includes a light emitting element such as a vertical cavity surface emitting layer (VCSEL) and a light receiving element such as a ToF sensor at positions around a lens of an imaging device and measures the distance to an object by measuring the time from emission of light from the light emitting element to reception of light by the ToF sensor through reflection by the object is known (for example, see Patent Document 1). This distance measuring method is widely known as a time of flight (ToF) method.

Citation List

Patent Document

Patent Document 1: Japanese Unexamined Patent Application, First Publication No. 2021-26236

SUMMARY

However, when the aforementioned technique is used, an optical axis of a lens and an optical axis of an irradiation unit are disposed to deviate from each other, and thus there is a problem that that an error will be included in a spatially measured distance. Since the error increases as a gap between the optical axis of the lens and the optical axis of the irradiation unit increases, it is not preferable to use a large lens (specifically, a lens with a large barrel diameter and a long barrel length) in the related art. That is, when a zoom lens which is likely to increase in size is applied to the related art, there is a problem that that an error occurs in the distance to be measured.

Even when the optical axis of the lens and the optical axis of the irradiation unit can be disposed to match, it cannot be said that an object to which the distance is to be measured is located at an optical axis center. When an object is not located at the optical axis center, the distance over which light is emitted from the irradiation unit and is reflected by the object (hereinafter referred to as a first optical path length) and the distance over which light is reflected by the object and is incident on the light receiving element (hereinafter referred to as a second optical path length) are different. According to the related art, since an arithmetic operation of measuring the distance using a time-of-flight of light to the object is performed by considering the first optical path length and the second optical path length as the same distance and dividing the time-of-flight of light by 2, there is a problem that that an error occurs.

The present embodiment was made in consideration of the aforementioned circumstances, and an objective thereof is to provide a distance information acquisition device that can measure the distance to an object with high accuracy.

[1] According to an aspect of an embodiment of the present embodiment, there is provided a distance information acquisition device that includes an irradiation unit configured to irradiate an object with light and a time of flight (ToF) sensor configured to receive light emitted from the irradiation unit and reflected by the object via an optical-system lens and acquires distance information for the object, the distance information acquisition device further including: a distance value acquiring unit configured to acquire a distance value on the basis of a timing at which emission of light is performed by the irradiation unit, a timing at which light is received by the ToF sensor, and the speed of light; a storage unit configured to store a predetermined numerical expression including at least information on an angle of view of the optical-system lens as a parameter; and a correcting arithmetic operation unit configured to calculate the distance information for the object by applying the acquired distance value to the predetermined numerical expression stored in the storage unit.

[2] The distance information acquisition device according to [1] further includes a correction value storage unit configured to store information on a difference between an actual measurement result of the distance to the object and the distance information for the object calculated by the correcting arithmetic operation unit as a correction value, and the correcting arithmetic operation unit calculates the distance information for the object on the basis of the correction value stored in the correction value storage unit.

[3] The distance information acquisition device according to [1] or [2], the optical-system lens is a zoom lens of which a focal distance is changeable, the distance information acquisition device further includes an angle-of-view information storage unit configured to correlate and store a focal distance of the optical-system lens and an angle of view corresponding to the focal distance, and the correcting arithmetic operation unit calculates the distance information for the object on the basis of the angle of view corresponding to the focal distance of the optical-system lens.

[4] The distance information acquisition device according to any one of [1] to [3], the optical-system lens is an interchangeable lens to which one of a plurality of lenses is attached, the distance information acquisition device further includes a lens identification information acquiring unit configured to acquire lens identification information for identifying the attached optical-system lens and an angle-of-view information storage unit configured to correlate and store a focal distance of the optical-system lens and an angle of view corresponding to the focal distance, the angle-of-view information storage unit correlates and stores a focal distance and an angle of view corresponding to the focal distance for each of the plurality of lenses, and the correcting arithmetic operation unit acquires an angle of view of a focal distance of a lens which is identified on the basis of the lens identification information acquired by the lens identification information acquiring unit and calculates the distance information fpr the object on the basis of the acquired angle of view.

[5] In the distance information acquisition device according to any one of [1] to [4], the distance between the irradiation unit and the ToF sensor may be changed by allowing the irradiation unit to move in an optical axis direction of the optical-system lens, and the correcting arithmetic operation unit calculates the distance information for the object on the basis of the distance between the irradiation unit and the ToF sensor.

[6] The distance information acquisition device according to any one of [1] to [4] further includes: a prism which is provided between the optical-system lens and the ToF sensor and on which light emitted from the irradiation unit to the object and reflected by the object is incident; a visible light reflecting dichroic film configured to reflect visible light out of light incident on the prism; and an RGB sensor configured to receive the visible light reflected by the visible light reflecting dichroic film.

[7] In the distance information acquisition device according to [6], the correcting arithmetic operation unit calculates the distance information for the object additionally on the basis of the thickness and the reflectance of glass of the prism.

According to the embodiment of the present embodiment, it is possible to measure the distance to an object with high accuracy.

BRIEF DESCRIPTION OF THE DRAWINGS

[FIG. 1] A diagram schematically illustrating a distance information acquisition system according to a first embodiment.
[FIG. 2] A functional configuration diagram illustrating the functional configuration of an arithmetic operation unit according to the first embodiment.
[FIG. 3] A first diagram illustrating an arithmetic operation that is performed by the arithmetic operation unit according to the first embodiment.
[FIG. 4] A second diagram illustrating an arithmetic operation that is performed by the arithmetic operation unit according to the first embodiment.
[FIG. 5] A diagram illustrating an example of three-dimensional information after a correcting arithmetic operation has been performed by a distance information acquisition device according to the first embodiment.
[FIG. 6] A diagram illustrating a modified example of the distance information acquisition system according to the first embodiment.
[FIG. 7] A diagram schematically illustrating calibration according to a second embodiment.
[FIG. 8] A diagram illustrating the functional configuration of a distance information acquisition system according to a third embodiment.
[FIG. 9] A diagram illustrating the functional configuration of a distance information acquisition system according to a fourth embodiment.
[FIG. 10] A diagram illustrating a problem to be solved by a distance information acquisition system according to a fifth embodiment.
[FIG. 11] A diagram illustrating the configuration of a distance information acquisition device according to the fifth embodiment.
[FIG. 12] A diagram illustrating a functional configuration of the distance information acquisition device according to the fifth embodiment.
[FIG. 13] A diagram illustrating an example of a correspondence table between a lens and an LD according to the fifth embodiment.

[FIG. 14] A diagram illustrating the configuration of a modified example of the distance information acquisition device according to the fifth embodiment.

[FIG. 15] A diagram illustrating the functional configuration of a distance information acquisition device according to a sixth embodiment.

[FIG. 16] A diagram illustrating an example of reflective spectral characteristics of a visible light reflecting dichroic film according to the sixth embodiment.

[FIG. 17] A diagram illustrating an example of an arrangement of a lens and an irradiation unit that are included in a distance information acquisition device 10 according to a seventh embodiment.

[FIG. 18] A diagram illustrating a ToF camera system according to the related art.

[FIG. 19] A diagram illustrating an example of an arrangement of a lens and a ToF sensor which are included in the ToF camera system according to the related art.

[FIG. 20] A diagram illustrating an example in which point group data is generated on the basis of a distance value acquired by the ToF camera system according to the related art.

DETAILED DESCRIPTION

Exemplary embodiments of a distance information acquisition device according to an aspect of the present embodiment will be described below in detail with reference to the accompanying drawings. The following embodiments are only examples, and the present embodiment is not limited to the embodiments. "On the basis of XX" mentioned in this specification means "on the basis of at least XX" and includes "on the basis of another element in addition to XX." "On the basis of XX" is not limited to direct use of XX and includes use of results obtained by performing calculation or processing on XX. "XX" is an arbitrary factor (for example, arbitrary information). In the drawings used for the following description, scales, numbers, and the like of constituent members may be made to be different from actual scales, numbers, and the like of the constituent members in order to make the constituent members be easily recognized.

[Related art]

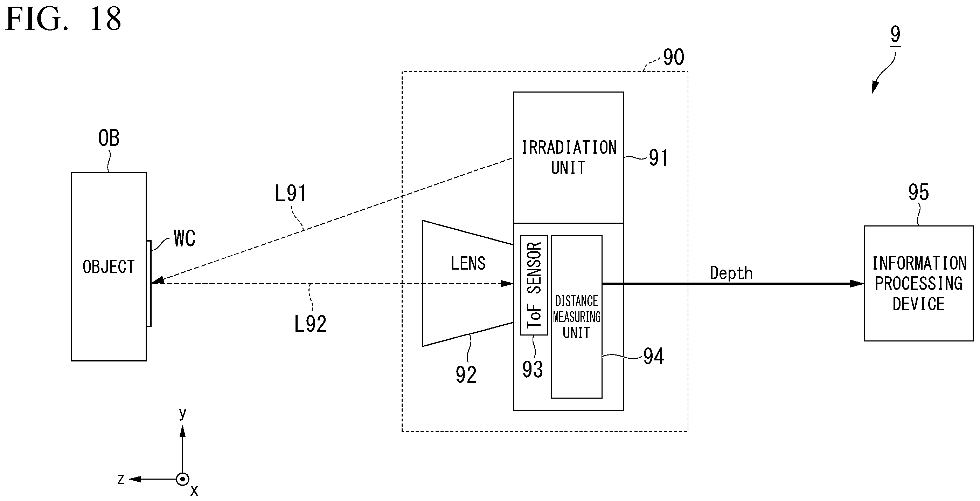

First, the related art will be described below with reference to FIGS. 18 to 20.

FIG. 18 is a diagram illustrating a ToF camera system according to the related art. A ToF camera system 9 according to the related art will be described with reference to the drawing. In the following description, positional relationships between constituents of the ToF camera system 9 and the like may be described using a three-dimensional orthogonal coordinate system of an x axis, a y axis, and a z axis.

The ToF camera system 9 includes a ToF camera device 90 and an information processing device 95. The ToF camera device 90 includes an irradiation unit 91, a lens 92, a ToF sensor 93, and a distance measuring unit 94. The ToF camera device 90 measures the distance to an object OB. In the illustrated example, a white chart WC is placed on the surface of the object OB in order to explain a problem in the related art. It is assumed that the white chart WC is disposed in parallel with the ToF sensor 93.

The irradiation unit 91 includes a light emitting element that can emit laser light and irradiates the object OB with the laser light. The laser light emitted from the irradiation unit 91 may be visible light or infrared light. The irradiation unit 91 may be, for example, a laser diode array such as a vertical cavity surface emitting laser (VCSEL). The irradiation unit 91 applies laser light in a direction (a z-axis direction in the drawing) perpendicular to the ToF sensor 93 on the basis of an instruction from the distance measuring unit 94. The light emitted from the irradiation unit 91 is reflected by the object OB and then is incident on the ToF sensor 93 via the lens 92. The distance measuring unit 94 measures the distance to the object OB on the basis of the time required from emission of light from the irradiation unit 91 to reception of the light in the ToF sensor 93.

The ToF sensor 93 includes a plurality of pixels on a two-dimensional coordinate system disposed in a vertical direction (a y-axis direction in the drawing) and a horizontal direction (an x-axis direction in the drawing). Each pixel included in the ToF sensor 93 detects a timing at which light is received. The ToF sensor 93 outputs detection information for each pixel in the two-dimensional coordinate system to the distance measuring unit 94 while scanning. The distance measuring unit 94 calculates a distance value for each pixel and generates a distance image which is two-dimensional array data. A direct time of flight (dToF) method or an indirect time of flight (iToF) method may be used as a distance measuring method used in the ToF sensor 93. In the illustrated example, the iToF method is assumed to be used. The distance image generated by the distance measuring unit 94 is converted to three-dimensional point group data by the information processing device 95. The information processing device 95 may be an information processing device such as a personal computer or a tablet terminal.

Here, a distance L91 which is the distance from the irradiation unit 91 of the ToF camera device 90 to the object OB and a distance L92 which is the distance from the object OB to the ToF sensor 93 of the ToF camera device 90 are preferably assumed to be the same. However, in reality, the distance L91 and the distance L92 may not be the same due to an irradiation angle of the irradiation unit 91, an optical path in the lens 92, or the like. According to the related art, the distance to the object OB is calculated on the basis of the assumption that the distance L91 and the distance L92 are the same. That is, according to the related art, since the distance to the object OB is calculated by ignoring a difference between the distance L91 and the distance L92, there is a problem that that an error occurs in a measurement result.

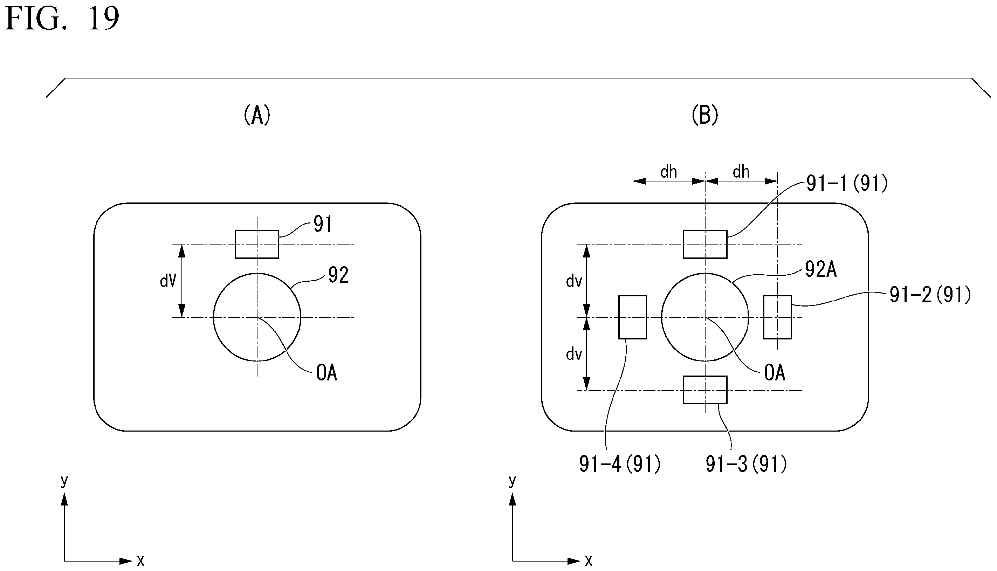

FIG. 19 is a diagram illustrating an example of an arrangement of a lens and a ToF sensor which are included in the ToF camera system according to the related art. An example of an arrangement of the lens 92 and the ToF sensor 93 will be described with reference to the drawing. FIG. 19(A) is a view when the ToF camera device 90 is seen from the object OB in the z-axis direction in FIG. 18. As illustrated in the drawing, the lens 92 and the irradiation unit 91 are disposed at positions perpendicular to the y axis. The distance from an optical axis OA of the lens 92 to the center position of the irradiation unit 91 is defined as a distance dv. It is known that an emission optical axis of the irradiation unit 91 is tilted and thus an error in the distance is curbed. However, when the irradiation unit 91 such as a VCSEL is tilted and disposed on a substrate, it causes an increase in the number of design steps or complication of a substrate shape. The error in the distance in a certain distance range may be curbed by tilting and disposing the irradiation unit 91, but the error is predicted to increase for a distance departing from the range.

FIG. 19(B) illustrates an example of a method that has been invented to avoid such a problem. In the illustrated example, a plurality of irradiation units 91 are disposed in the vicinity of the lens 92. In the illustrated example, irradiation units 91-1 to 91-4 are disposed as the irradiation unit 91 at positions which are vertically and horizontally symmetric with respect to the lens 92. Specifically, the irradiation units 91-1 and 91-3 are disposed at positions which are separated by a distance dv from the optical axis OA of the lens 92A in the vertical direction of the lens 92. The irradiation units 91-2 and 91-4 are disposed at positions which are separated by a distance dh from the optical axis OA of the lens 92A in the horizontal direction of the lens 92. In this case, a plurality of irradiation units 91 need to be used, and thus there are problems including an increase in component costs, an increase in size of a device, an increase in the number of steps, and the like. When a plurality of irradiation units 91 are used and the plurality of irradiation units 91 are simultaneously turned on, a problem in complication of wiring or processing heat generated from the plurality of irradiation units 91 also occurs in addition.

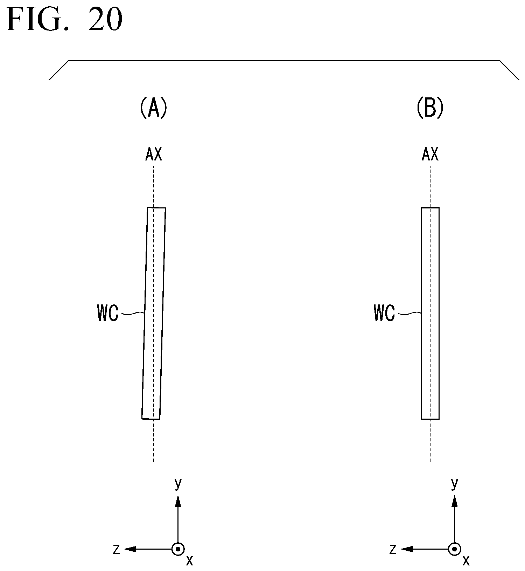

FIG. 20 is a diagram illustrating an example in which point group data is generated on the basis of a distance value acquired by the ToF camera system according to the related art. An example of three-dimensional information acquired in the array illustrated in FIG. 19 will be described with reference to the drawing. The illustrated example shows a view when seen at the same angle as in FIG. 18, and a camera viewpoint direction is a direction from right to left. FIG. 20(A) corresponds to the array illustrated in FIG. 19(A), and FIG. 20(B) corresponds to the array illustrated in FIG. 19(B). Since the white chart WC is disposed in parallel with the ToF sensor 93, the white chart WC is in parallel with an axis AX. However, in the example illustrated in FIG. 20(A), a tilt is caused in the vertical direction. Specifically, in the example illustrated in FIG. 20(A), the distance to the ToF camera device 90 is measured to be shorter on the upper side (that is, at a position closer to the irradiation unit 91). On the lower side (that is, at a position farther from the irradiation unit 91), the distance to the ToF camera device 90 is measured to be longer. This is an error which occurs because the distance and the time in which light emitted from the irradiation unit 91 reaches the upper side of the white chart WC are different from the distance and the time in which the light reaches the lower side. Particularly, in a system that generates point group data from various angles using a plurality of ToF camera devices 90, positions in distance data between the cameras do not match due to such an error, and thus it is difficult to combine the point group data. In the system that generates point group data from various angles using a plurality of ToF camera devices 90, a problem in that a three-dimensional shape acquired by combining the distance data of the plurality of cameras is distorted may occur. In the example illustrated in FIG. 20(B), such an error does not occur, but a problem due to use of a plurality of irradiation units 91 occurs.

[First embodiment]

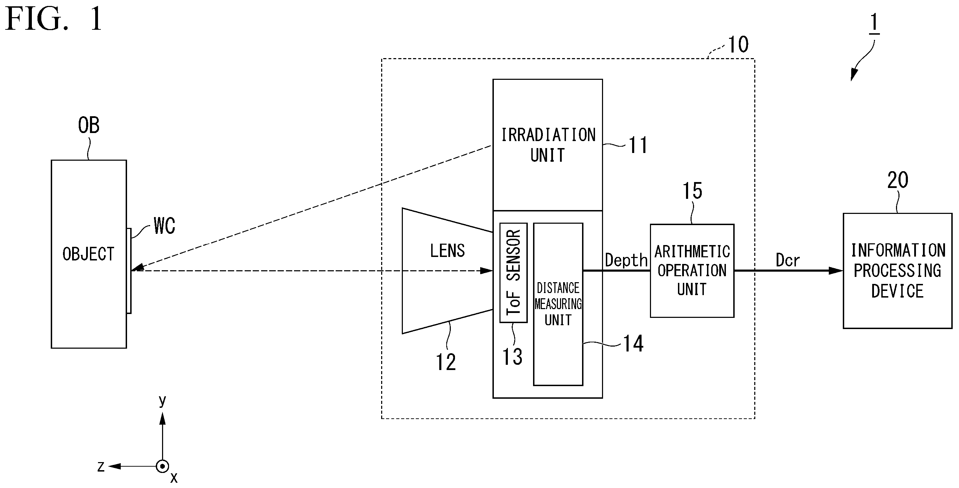

This embodiment is for solving the aforementioned problem. Hereinafter, a first embodiment will be described with reference to FIGS. 1 to 6.

FIG. 1 is a diagram schematically illustrating a distance information acquisition system according to the first embodiment. A distance information acquisition system 1 will be described below with reference to the drawing. In the following description, positional relationships between constituents of the distance information acquisition system 1 and the like may be described using a three-dimensional orthogonal coordinate system of an x axis, a y axis, and a z axis.

The distance information acquisition system 1 includes a distance information acquisition device 10 and an information processing device 20. The distance information acquisition device 10 includes an irradiation unit 11, a lens 12, a ToF sensor 13, a distance measuring unit 14, and an arithmetic operation unit 15. The distance information acquisition device 10 acquires the distance to an object OB. In the illustrated example, a white chart WC is placed on the surface of the object OB in order to explain advantageous effects of a correcting arithmetic operation according to the present embodiment. It is assumed that the white chart WC is disposed in parallel with a light receiving surface of the ToF sensor 13.

The irradiation unit 11 includes a light emitting element that can emit light such as laser light and irradiates an object OB with the light. The laser light emitted from the irradiation unit 11 may be visible light or infrared light. The number of light emitting elements included in the irradiation unit 11 may be two or more. The irradiation unit 11 may specifically be a laser diode array such as a VCSEL. The irradiation unit 11 applies laser light in a direction (the z-axis direction in the drawing) which is perpendicular to the ToF sensor 13 on the basis of an instruction from the distance measuring unit 14. The light emitted from the irradiation unit 11 is reflected by the object OB and is incident on the ToF sensor 13 via the lens 12. The lens 12 may specifically be an optical-system lens. The distance measuring unit 14 measures the distance to the object OB on the basis of the time required from emission of light from the irradiation unit 11 to reception of light by the ToF sensor 13.

The ToF sensor 13 includes a plurality of pixels on a two-dimensional coordinate system disposed in the vertical direction (the y-axis direction in the drawing) and the horizontal direction (the x-axis direction in the drawing). Each pixel included in the ToF sensor 13 detects a timing at which light is received. The ToF sensor 13 outputs detection information for each pixel in the two-dimensional coordinate system to the distance measuring unit 14 while scanning. The distance measuring unit 14 calculates a distance value for each pixel and generates a distance image which is two-dimensional array data. A dToF method or iToF method may be used as a distance measuring method used in the ToF sensor 13. In the illustrated example, the iToF method is assumed to be used. The arithmetic operation unit 15 performs a correcting arithmetic operation on the distance image generated by the distance measuring unit 14. The correcting arithmetic operation performed by the arithmetic operation unit 15 is an arithmetic operation for correcting the distance values which are generated on the basis of a deviation in position between the optical axis of the lens 12 and the irradiation unit 11. After the correcting arithmetic operation has been performed thereon by the arithmetic operation unit 15, the distance image generated by the distance measuring unit 14 is converted to three-dimensional point group data by the information processing device 20. The information processing device 20 may be an information processing device such as a personal computer or a tablet terminal.

The function of the arithmetic operation unit 15 in the present embodiment is included in the distance information acquisition device 10, but the function corresponding to the arithmetic operation unit 15 may be included in the information processing device 20. The function corresponding to the arithmetic operation unit 15 may be included in a device other than the distance information acquisition device 10 and the information processing device 20. That is, the configuration included in the distance information acquisition device 10 and a configuration including the function corresponding to the arithmetic operation unit 15 included in the information processing device 20 may be referred to as the distance information acquisition device 10.

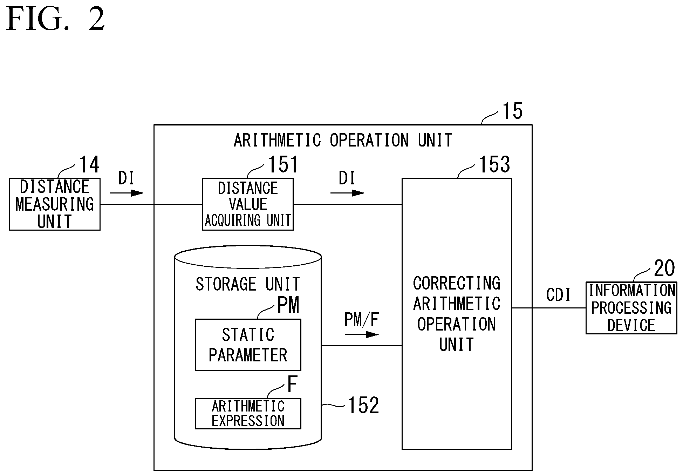

FIG. 2 is a functional configuration diagram illustrating the functional configuration of the arithmetic operation unit according to the first embodiment. An example of the functional configuration of the arithmetic operation unit 15 will be described below with reference to the drawing. The arithmetic operation unit 15 includes a distance value acquiring unit 151, a storage unit 152, and a correcting arithmetic operation unit 153. These functional units are realized, for example, using an electronic circuit. Each functional unit may include a storage means such as a semiconductor memory or a magnetic hard disk device therein according to necessity. Each function may be realized by a computer and software.

The distance value acquiring unit 151 acquires a distance image DI from the distance measuring unit 14. The distance image DI includes a distance value (a depth value) of each point on the two-dimensional coordinate system. This distance value can also be referred to as a pre-correction distance value. The distance value is acquired on the basis of a timing at which irradiation of light from the irradiation unit 11 is performed, a timing at which light is received by the ToF sensor 13, and the speed of light. The distance value acquiring unit 151 outputs the acquired distance image DI to the correcting arithmetic operation unit 153.

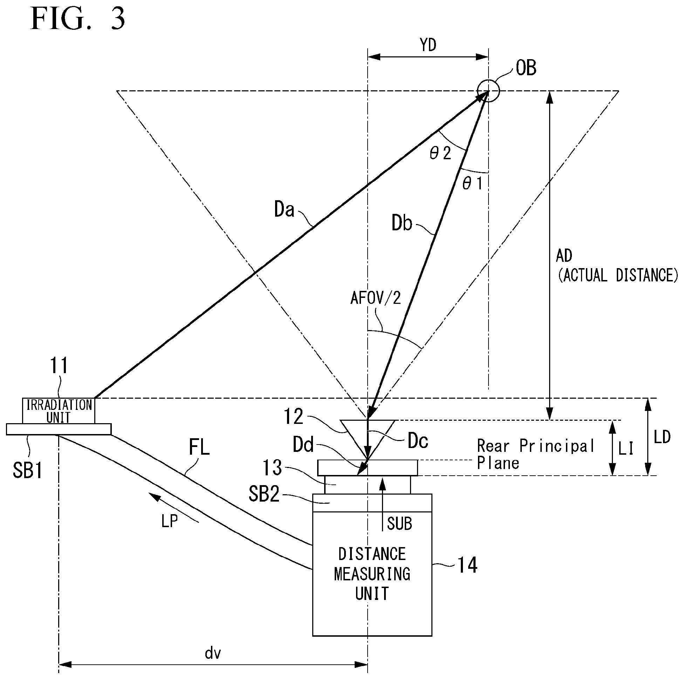

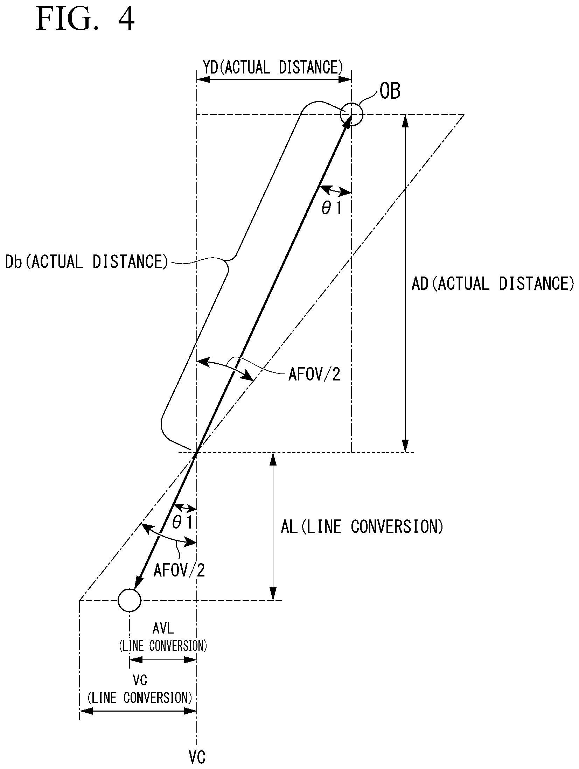

The storage unit 152 stores a static parameter PM and an arithmetic expression F. The static parameter PM is a parameter which is static in the distance information acquisition device 10. The static parameters PM may be a parameter based on a structure or an arrangement of the lens 12. The static parameters PM include at least information on an angle of view of the lens 12. The information on the angle of view of the lens 12 may be information on an angular field of view (AFOV). The arithmetic expression F is a numerical expression which is used for a correcting arithmetic operation. Details of the correcting arithmetic operation will be described later with reference to FIGS. 3 and 4. The static parameter PM and the arithmetic expression F do not have to be stored separately, and, for example, the static parameter PM may be included in the arithmetic expression F. That is, the arithmetic expression F may be a numerical expression including the static parameter PM such as the AFOV as a parameter. The storage unit 152 does not have to be included in the arithmetic operation unit 15, and the arithmetic operation unit 15 may be configured to acquire information including the static parameter PM and the arithmetic expression F from an external device.

The correcting arithmetic operation unit 153 acquires the distance image DI from the distance value acquiring unit 151 and acquires the static parameter PM and the arithmetic expression F from the storage unit 152. The correcting arithmetic operation unit 153 calculates distance information for an object by applying the pre-correction distance value included in the acquired distance image DI to the arithmetic expression F stored in the storage unit 152. Specifically, the arithmetic operation performed by the correcting arithmetic operation unit 153 is an arithmetic operation of correcting the pre-correction distance value acquired from the distance value acquiring unit 151 on the basis of the structure, the arrangement, and the like of the lens 12. Accordingly, the arithmetic operation performed by the correcting arithmetic operation unit 153 may be referred to as a correcting arithmetic operation. The correcting arithmetic operation unit 153 outputs a result of the correcting arithmetic operation as a corrected distance image CDI to the information processing device 20.

Details of the correcting arithmetic operation performed by the correcting arithmetic operation unit 153 will be described below with reference to FIGS. 3 and 4. The correcting arithmetic operation which will be described below does not have to be performed by the correcting arithmetic operation unit 153, and the correcting arithmetic operation which will be described below may be performed in advance and stored as the arithmetic expression F in the storage unit 152. That is, description with reference to FIGS. 3 and 4 may be description of the principle of correction which is performed using the arithmetic expression F. In FIGS. 3 and 4, scales, numbers, and the like of constituent members may be made to be different from actual scales, numbers, and the like of the constituent members in order to make the constituent members be easily recognized.

FIG. 3 is a first diagram illustrating an arithmetic operation that is performed by the arithmetic operation unit according to the first embodiment. In the drawing, the irradiation unit 11, a first substrate SB1, the lens 12, the ToF sensor 13, a second substrate SB2, the distance measuring unit 14, a flexible cable FL, and an object OB are illustrated. In description with reference to the drawing, the constituents described above with reference to FIG. 1 or 2 may be referred to by the same reference signs, and a description thereof may be omitted.

In the illustrated example, the irradiation unit 11 is fixed to the first substrate SB1, and the ToF sensor 13 and the distance measuring unit 14 are fixed to the second substrate SB2. That is, the irradiation unit 11 and the ToF sensor 13 and the distance measuring unit 14 are fixed to different substrates. The irradiation unit 11 and the distance measuring unit 14 are electrically connected by the flexible cable FL. The flexible cable FL transmits an electrical signal from the distance measuring unit 14 to the irradiation unit 11. Specifically, the distance measuring unit 14 outputs an emission pulse LP to the irradiation unit 11. The emission pulse LP includes information on a timing at which emission of light from the irradiation unit 11 is performed. The emission pulse LP may be a control signal for causing the irradiation unit 11 to perform direct irradiation. The irradiation unit 11 emits light when the emission pulse LP is received. The distance measuring unit 14 outputs a shutter pulse SUB to the ToF sensor 13. The shutter pulse SUB is output at the timing at which light is received by the ToF sensor 13. When the shutter pulse SUB is received, the ToF sensor 13 detects light emitted from the irradiation unit 11 and reflected by the object OB. The distance measuring unit 14 outputs a drive pulse or the like for scanning detection results from a plurality of elements which are two-dimensionally arranged to the ToF sensor 13. The distance measuring unit 14 manages timings from emission of light from the irradiation unit 11 to reception of light in the ToF sensor 13.

Since both the distance measuring unit 14 and the ToF sensor 13 are provided on the second substrate SB2, a propagation time of the shutter pulse SUB and the drive pulse from the distance measuring unit 14 to the ToF sensor 13 ranges from about several hundreds of [psec] to several [nsec]. The propagation time is treated as being ignorable in consideration of distance measurement accuracy of the ToF sensor 13. On the other hand, since the irradiation unit 11 is fixed to the first substrate SB1 other than the second substrate SB2 to which the distance measuring unit 14 is fixed, a signal is transmitted thereto via the flexible cable F or the like. Accordingly, a nonignorable delay is caused in transmission of a signal from the distance measuring unit 14 to the irradiation unit 11 even in consideration of the distance measurement accuracy of the ToF sensor 13. One reason the irradiation unit 11 has to be fixed to the first substrate SB1 other than the second substrate SB2 is a structural reason of a camera. A thin coaxial cable or the like may be used instead of the flexible cable FL, but a nonignorable delay is caused in transmission of a signal from the distance measuring unit 14 to the irradiation unit 11 in any way.

In the illustrated example, the center of an effective image range of the ToF sensor 13 matches the optical axis of the lens 12. An interval between the optical axis of the lens 12 and the center position of a light emission surface of the irradiation unit 11 is referred to as a distance dV. In the structure in which the irradiation unit 11 is located above the ToF sensor 13 as illustrated in FIG. 1, the left side in FIG. 3 is the upper side of the camera, and the right side in FIG. 3 is the lower side of the camera. The ToF sensor 13 is generally located in a camera body for the flange back of the lens 12. The distance between the light emission surface of the irradiation unit 11 and the light receiving surface of the ToF sensor 13 is referred to as a distance LD. An entrance pupil position is defined in the lens 12. In the illustrated example, the distance from the light receiving surface of the ToF sensor 13 to the entrance pupil position of the lens 12 is referred to as a distance LI. The maximum angle of view of the lens is defined on the basis of the entrance pupil position. The maximum angle of view of the lens is referred to as an AFOV.

The distance in an optical axis direction from the entrance pupil position of the lens 12 to the object OB is referred to as a distance AD. The distance on the lower side (the right side in the drawing) of the camera from the optical axis to the object OB is referred to as a distance YD. In this case, light emitted from the irradiation unit 11 reaches the object OB at a distance Da. Light reflected by the object OB reaches the entrance pupil position of the lens 12 at a distance Db. Here, the distance from the entrance pupil position of the lens 12 to a rear principal plane of the lens is referred to as a distance Dc, and the distance from the rear principal plane to the light receiving surface of the ToF sensor 13 is referred to as a distance Dd.

As illustrated in the drawing, the distance Dd is the distance with an angle with respect to the ToF sensor 13 according to an angle of an incident main light beam. When the ToF sensor 13 is, for example, a small sensor of 1/4 inches, the effective image range of the ToF sensor 13 is H3.6 [mm]×V2.7 [mm] which is small. In a C mount lens, the flange back is 17.526 [mm] which is short. In the illustrated example, for the purpose of simplification of explanation, it is assumed that an angle between the distance Dc and the distance Dd is ignored and is treated as Dc+Dd≈LI.

The angle between the distance Dc and the distance Dd may be calculated on the basis of the distance from the rear principal plane to the light receiving surface of the ToF sensor 13 and pixel positions of the ToF sensor 13 corresponding to the position of the object OB, the distance Dd may be calculated, and then the distance Dc and the distance Dd may be accurately calculated. Details of calculation of the distance Dc and the distance Dd will be omitted.

In the ToF camera device 90 according to the related art, the distance is generally calculated by multiplying the time from emission of light from the irradiation unit 91 to reception of light by the ToF sensor 93 by the speed of light $C=3\times10^8$ [m/s] and dividing the multiplication result by 2. Here, division by 2 is for calculating a one-way time of a reciprocation time from emission of light from the irradiation unit 91 to returning of light to the ToF sensor 93. That is, according to the related art, calculation is performed by considering the distance Da, the distance Db, the distance Dc, and the distance Dd as the same distance. A time reference in this model is the timing at which the distance measuring unit 14 outputs the emission pulse LP to the irradiation unit 11. Distance measurement data is obtained by multiplying an actual time from the timing at which the emission pulse LP is generated to the timing at which light is received by the ToF sensor 13 by the speed of light C. In this model, instead of calculating the distance by simple division by 2 as in the related art, the distance is calculated through detailed arithmetic operations as will be described later. Specifically, the distance is calculated by summing the propagation time in the flexible cable FL, the propagation time from the irradiation unit 11 to the object OB, the propagation time from the position of the object OB to the entrance pupil position of the lens 12, and the propagation time from the entrance pupil position of the lens 12 to the light receiving surface of the ToF sensor 13. A specific arithmetic operation will be described below in detail.

First, when the propagation time in the flexible cable FL is defined as Flt, Flt can be approximated by Expression (1) based on the dielectric constant of the flexible cable FL. Ve is the propagation speed in the flexible cable FL, and Fl is the length of the flexible cable FL.

$$Flt=Fl/Ve \qquad\qquad \ldots(1)$$

Here, when the speed of light is defined as C and the dielectric constant of the flexible cable FL is defined as ε, the propagation speed Ve in the flexible cable FL can be referred to as C/SQRT(ε). When the propagation time from the entrance pupil position of the lens 12 to the light receiving surface of the ToF sensor 13 is defined as Lt, Lt can be approximated by Expression (2).

$$Lt=(LI-Lk)/C+Lk/C\times Lr \qquad\qquad \ldots(2)$$

Here, Lk is a total thickness of glass in the lens, and Lr is the reflectance of the glass.

When the propagation time to the object OB after light has been emitted from the irradiation unit 11 is defined as Dat, the propagation time from the object OB to the entrance pupil position of the lens 12 is defined as Dbt, and a distance measurement time actually acquired by the ToF sensor 13 is defined as TALL, TALL can be obtained using Expression (3).

$$TALL=Flt+Lt+Dat+Dbt \qquad\qquad \ldots(3)$$

The measured distance acquired through an arithmetic operation in the distance measuring unit 14 (that is, a distance value obtained in the related art and including an error) is defined as Depth, Depth can be obtained by Expression (4).

$$Depth=TALL\times C/2 \qquad\qquad \ldots(4)$$

Since the Depth value in Expression (4) includes the distance difference between Fl or Da and Db, but an actual physical distance to the object OB is LI+Db in the drawing, the distance in Expression (4) is different from the actual physical distance and includes an error. Here, snice the value of Fl is known from the length of the flexible cable FL, LI+Db can be accurately calculated if the distances Da and Db are accurately calculated. Accordingly, when a distance obtained by summing Da and Db is defined as Dab, the distance Dab can be calculated by the following equations.

$$Dab=Da+Db \qquad \ldots(5)$$

$$Dab=(TALL-Flt-Lt)\times C \qquad \ldots(6)$$

FIG. 4 is a second diagram illustrating an arithmetic operation that is performed by the arithmetic operation unit according to the first embodiment. This drawing is used to convert an actual distance to the number of LINEs of the ToF sensor 13 (hereinafter simply referred to as LINE conversion). In the drawing, YD, AD, and $\theta1$ which are distances indicating an actual position of the object OB are described using a relationship between AVL and AL in which the position of the object OB is expressed by a LINE number of the ToF sensor 13. It can be conceptually ascertained that a triangle formed by YD, AD, and $\theta1$ is a triangle congruent to a triangle formed by AVL, AL, and $\theta1$.

A method of calculating $\theta1$ will be described below with reference to FIG. 4. The LINE number of V of a pixel of HV ascertained by the ToF sensor 13 with respect to the position of the object OB is referred to as AV. When the center line of effective pixels is defined as a center VC and the number of lines from the center position to AV is defined as AVL, AVL can be expressed by Expression (7).

$$AVL=AV-VC \qquad \ldots(7)$$

Here, the maximum number of LINEs which may serve as a distance measuring point of the maximum angle of view AFOV is the largest at a distance VC from the center VC. The position of the object OB at which AVL and VC are equal is a position at which the angle of view is AFOV which is the maximum angle of view of the lens 12 with respect to the camera. This AFOV is determined by the lens. In general, when the aspect ratio of effective pixels of the ToF sensor 13 is, for example, 4:3 which is different in the vertical direction and the horizontal direction, the angles of view in the vertical direction and the horizontal direction are different. Accordingly, AFOV in the vertical direction and AFOV in the horizontal direction are defined. As AFOV handled herein, AFOV in the vertical direction can applied when the irradiation unit 11 deviates from the optical axis of the lens in the vertical direction, and AFOV in the horizontal direction can be applied when the irradiation unit 11 deviates from the optical axis of the lens in the horizontal direction. In the illustrated example, since the irradiation unit deviates in the vertical direction, AFOV in the vertical direction is input.

When the position of the object OB at the maximum angle of view is considered through line conversion and the distance AD is AL calculated as a line conversion ratio, AL can be expressed by Expression (8) based on a relation of a right angled triangle formed by VC and an angle AFOV/2.

$$AL=VC/TAN(AFOV/2) \qquad \ldots(8)$$

Accordingly, the angle $\theta1$ can be expressed by Expression (9).

$$\theta1=ATAN(AVL/AL) \qquad \ldots(9)$$

The actual distance AD is calculated using $\theta1$ in Expression (9). AD which is a proportion of AL can be expressed by Expression (10).

$$AD=Db\times COS(\theta1) \qquad \ldots(10)$$

Similarly, YD which is a proportion of AVL can be expressed by Expression (11).

$$YD=Db\times SIN(\theta1) \qquad \ldots(11)$$

Referring back to FIG. 3, when the distance in the z direction between the light emission surface of the irradiation unit 11 and the light receiving surface of the ToF sensor 13 is defined as LD, Da can be expressed by Expression (12). Lz=LD-LI is established.

$$Da=SQRT((AD-Lz)^2+(YD+dv)^2) \qquad \ldots(12)$$

By calculating Da using simultaneous equations of Expressions (12) and (5), Expression (13) can be derived.

Da=(Dab^2 + Lz^2 + dv^2 - 2 × Lz × Dab × COS(θ1) + 2 × dv × Dab × SIN(θ1))/(2 × Dab - 2 × Lz × COS (θ1) + 2 × dv × SIN(θ1))    (13)

Accordingly, Db can be derived as Expression (14) from Expression (5).

$$Db=Dab-Da \qquad \dots(14)$$

Dab can be derived as Expression (15) from Expressions (4) and (6).

$$Dab=Depth \times 2-(Flt-Lt) \times C \qquad \dots(15)$$

When a post-correction distance is calculated as Dcr through this calculation, Dcr can be derived as Expression (16).

Dcr = Db + LI = Dab - (Dab^2 + Lz^2 + dv^2 - 2 × Lz × Dab × COS(θ1) + 2 × dv × Dab × SIN(θ1))/(2 × Dab - 2 × Lz × COS(θ1) + 2 × dv × SIN(θ1)) + LI    (16)

Here, Dab, θ1, and Lz are the same as described below.

$$Dab=Depth \times 2-(Flt-Lt) \times C$$

$$θ1=ATAN(AVL/AL)=ATAN(AVL/(VC/TAN(AFOV/2)))$$

$$Lz=LD-LI$$

In Expression (16), Flt, Lt, LD, LI, dv, VC, and AFOV are static parameters which are determined according to structures of the camera and the lens. That is, these parameters are stored as static parameter PM in the storage unit 152. Expression (16) is an example of the arithmetic expression F. The static parameters PM can be set to fixed values in advance. The storage unit 152 may store a numerical expression in which the static parameters PM are set to fixed values instead of the static parameters PM and the arithmetic expression F. By inserting a depth value obtained by converting a measurement time acquired from the ToF sensor 13 for the position of the object OB using the distance measuring unit 14 and a dynamic parameter of the line number AVL of pixels of the ToF sensor 13 into the numerical expression (Expression (16) into which fixed values are substituted), a correct distance in which a positional error between the optical axis of the lens and the irradiation unit 11 has been corrected is automatically obtained for each pixel which is scanned. The correcting arithmetic operation unit 153 calculates a post-correction distance by acquiring the depth value and the line number AVL from the distance image DI and substituting the acquired data into the numerical expression and outputs the post-correction distance as a corrected distance image CDI to the information processing device 20.

In Expression (16), a correction value changes according to the angle of view of AFOV of the lens and an angle with respect to a pixel to be scanned by the ToF sensor 13 by measured distances. It can also be seen from Expression (16) that the correction value changes spatially without using correction with fixed values. Flt in Expression (16) is a propagation time due to a delay in the flexible cable FL, but the delay time of Flt may be set to be ignorable by advancing the emission pulse LP output from the distance measuring unit 14 by Flt. In this case, Flt in Expression (16) can be set to 0.

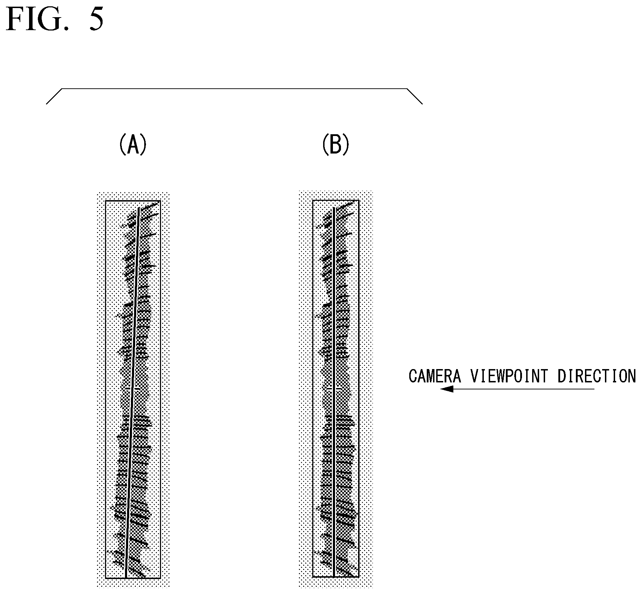

FIG. 5 is a diagram illustrating an example of three-dimensional information after the correcting arithmetic operation has been performed by the distance information acquisition device according to the first embodiment. An example in which point group data is generated on the basis of a result of the correcting arithmetic operation performed by the distance information acquisition device 10 will be described below with reference to the drawing. In the example illustrated in the drawing, a planar chart with grid lines is used instead of the white chart WC. The drawing is a view when the chart is seen transversely from the left side, and point groups in the drawing are illustrated at an angle at which a sightline of the camera is directed from left to right in the drawing. The illustrated example is a result when the distance between the center of the irradiation unit 11 and the optical axis of the lens is 0.07 [m (meters)] and the distance to the center of the object OB is 0.6 [m]. FIG. 5(A) illustrates an example when correction has not been performed, and FIG. 5(B) illustrates an example when the correcting arithmetic operation using Expression (16) has been performed for each pixel. As illustrated in FIG. 5(A), it can be seen that an image is tilted such that an upper part is closer and a lower part is farther before the correction has been performed. On other hand, as illustrated in FIG. 5(B), it can be seen that the image become straight and the tilt is corrected after the correction.

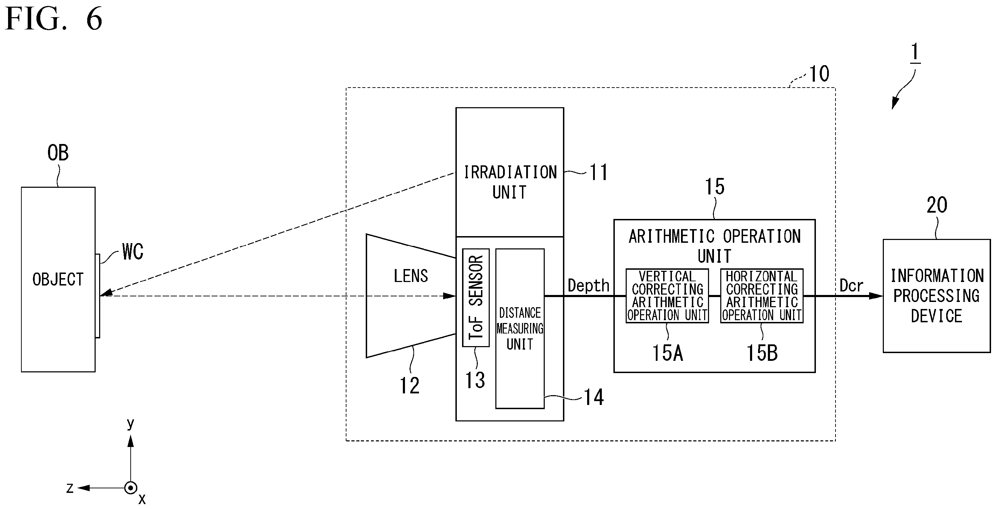

FIG. 6 is a diagram illustrating a modified example of the distance information acquisition system according to the first embodiment. A modified example of the distance information acquisition system 1 will be described below with reference to the drawing. In the aforementioned example, the position of the irradiation unit 11 is located in the vertical direction with respect to the optical axis of the lens 12. In the modified example of the distance information acquisition system 1, the position of the irradiation unit 11 is located in the horizontal direction with respect to the optical axis of the lens 12. A deviation in the vertical direction is referred to as dv, and a deviation in the horizontal direction is referred to as dh.

The deviation in the horizontal direction can be calculated by replacing AVL in Expression (16) with the pixel number AHP scanned in the horizontal direction and replacing dv with dh. In the illustrated example, the arithmetic operation unit 15 includes a vertical correcting arithmetic operation unit 15A and a horizontal arithmetic operation unit 15B. The vertical correcting arithmetic operation unit 15A calculates an arithmetic operation using Expression (16) on the deviation in the vertical direction and outputs the corrected distance as Dcrv. The horizontal correcting arithmetic operation unit 15B additionally performs an arithmetic operation on Dcrv output from the vertical correcting arithmetic operation unit 15A by replacing AVL in Expression (16) with the pixel number AHP and replacing dv with dh in the horizontal direction again. Finally, the arithmetic operation unit 15 can obtain Dcr corrected in both the vertical direction and the horizontal direction. At this time, as AFOV in Expression (16), vertical AFOV is used for the vertical correcting arithmetic operation unit 15A, and horizontal AFOV is used for the horizontal correcting arithmetic operation unit 15B.

[Summary of first embodiment]

According to the aforementioned embodiment, the irradiation unit 11 of the distance information acquisition device 10 emits light to an object OB, and the ToF sensor 13 of the distance information acquisition device 10 receives light emitted from the irradiation unit 11 and reflected by the object OB via the optical-system lens. The irradiation unit 11 and the ToF sensor 13 of the distance information acquisition device 10 acquires distance information for the object OB. The distance value acquiring unit 151 of the distance information acquisition device 10 acquires a distance value (that is, a pre-correction depth value) on the basis of a timing at which light is emitted from the irradiation unit 11, a timing at which light is received by the ToF sensor 13, and the speed of light. The storage unit 152 of the distance information acquisition device 10 stores a predetermined numerical expression (that is, Expression (16) into which the static parameters are substituted) including at least information (that is, AFOV) on an angle of view of an optical-system lens as a parameter. The correcting arithmetic operation unit 153 of the distance information acquisition device 10 calculates the distance information for the object OB by applying the acquired distance value to the predetermined numerical expression stored in the storage unit 152. The predetermined numerical expression includes information on a correcting arithmetic operation based on the distance from the irradiation unit 11 to the object OB and the distance from the object OB to the ToF sensor 13. According to the present embodiment, it is possible to measure the distance to an object with high accuracy by performing the correcting arithmetic operation on a result acquired from the distance measuring unit 14. According to the present embodiment, since the correcting arithmetic operation is performed on the results acquired from the ToF sensor 13 and the distance measuring unit 14 in the related art, it is possible to easily correct the measured distance by adding a configuration for performing the correcting arithmetic operation to the related art.

[Second embodiment]

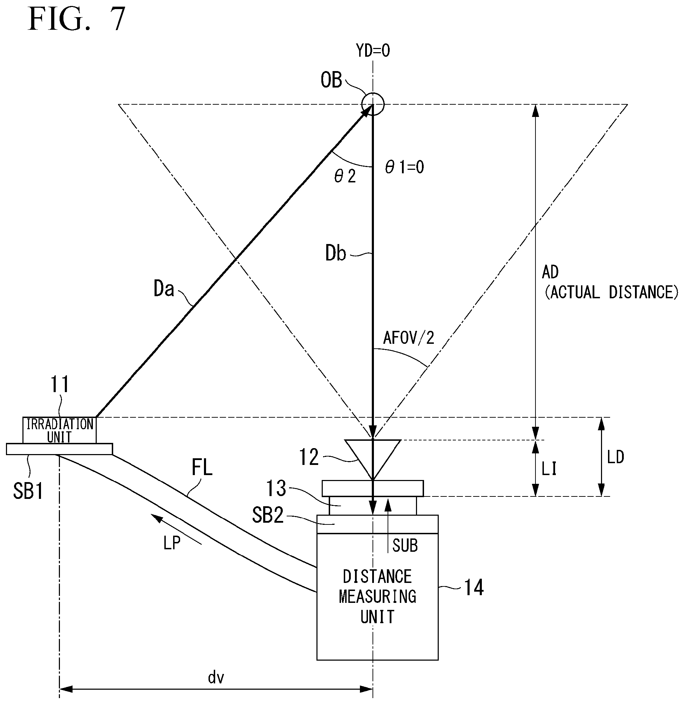

A second embodiment will be described below with reference to FIG. 7. The second embodiment is different from the first embodiment in that a correcting arithmetic operation is performed in additional consideration of distance calibration in addition to the configuration of the first embodiment. An error can be logically corrected with high accuracy by performing the aforementioned correcting arithmetic operation, but an actually acquired value may include an additional error. A main reason for the additional error is a waveform distortion of pulse light emitted from the irradiation unit 11 such as VCSEL. Pulse light ideally has a rectangular shape, but the waveform of pulse light may be actually distorted to a non-rectangular shape according to performance of a driver of the irradiation unit 11 or ringing may occur. An error may occur in a measurement result due to such waveform distortion. In the second embodiment, a difference between an actual distance and a distance acquired from the ToF sensor 13 is measured in a calibration mode in advance, the difference is stored in a storage area of an electrically erasable programmable read-only memory (EEPROM), and a result of a correcting arithmetic operation performed by the arithmetic operation unit 15 is additionally corrected.

That is, the distance information acquisition device 10 according to the second embodiment further includes a correction value storage unit (for example, an EEPROM) and stores a correction value acquired as a calibration result. The correction value may specifically be information on a difference between a result obtained by actually measuring the distance to an object OB and distance information for the object calculated by the arithmetic operation unit 15. The arithmetic operation unit 15 calculates distance information on the object OB on the basis of the correction value stored in the correction value storage unit.

FIG. 7 is a diagram schematically illustrating calibration according to the second embodiment. A specific calibration procedure will be described below with reference to the drawing. In calibration, first, a correspondence relation between an actual distance (a theoretical value) and the distance (a measured value) measured by the distance information acquisition device 10 including a correcting arithmetic operation is obtained while changing the distance between the distance information acquisition device 10 and the object OB. Specifically, when the distance-measuring range of the distance information acquisition device 10 ranges from 1 [m] to 2 [m], the distance-measuring range of 1 [m] to 2 [m] is divided into 10 sections, the sections are imaged while changing the distance between the distance information acquisition device 10 and the object OB at intervals of 10 [cm], and the correspondence relation between a theoretical value and a measured value is obtained. The correspondence relation is stored as a correction value in the correction value storage unit such as EEPROM. In the following description, an operation of acquiring a correction value on the basis of a theoretical value and a measured value may be referred to as calibration.

The specific calibration procedure will be described below. As illustrated in the drawing, an object OB is disposed on the optical axis (that is, YD=0) of the lens 12, and depth values (that is, pre-correction depth values) at 10 points at which a value of AD+LI ranges from 1 [m] to 2 [m] and of which an interval is 10 [cm] is acquired from the ToF sensor 13. The acquired depth values are substituted into Expression (16), and a post-correction distance Dcr is calculated. The difference between the post-correction distance Dcr and an actual physical distance AD+LI is defined as $\Delta e$. The correspondence relation between the distance and $\Delta e$ is stored in the correction value storage unit. $\Delta e$ is calculated by $\Delta e$=physical distance AD+LI - Dcr.

An arithmetic operation when the distance is actually measured in a distance measuring mode other than the calibration mode will be described below. First, the distance information acquisition device 10 reads the correction values at intervals of 10 [cm] close to the measured distance from the correction value storage unit and corrects the distance by summing them. When the distance information acquisition device 10 is located at a position between the intervals of 10 [cm], the correction value of the distance between the intervals of 10 [cm] may be acquired by selecting a correction value at two points close to the distance from the correction value storage unit and interpolating the correction values through linear interpolation or the like. This calibration may be performed at the center point of an effective image.

A specific procedure in the distance measuring mode will be described below. First, $\Delta e$ corresponding to the measured pre-correction depth value is read from $\Delta e$ at intervals of 10 [cm] stored in the correction value storage unit, and a correction value $\Delta E$ to be applied is acquired. Regarding the distance at the intervals of 10 [cm], the correction value $\Delta E$ to be applied is acquired by reading two neighboring points from $\Delta e$ and performing linear interpolation in proportion to the interval. In the second embodiment, the correction value $\Delta E$ can be added to Expression (16) to derive Expression (17).

$$Dcr' = Db + LI + \Delta E = Dab - (Dab^2 + Lz^2 + dv^2 - 2 \times Lz \times Dab \times COS(\theta1) + 2 \times dv \times Dab \times SIN(\theta1))/(2 \times Dab - 2 \times Lz \times COS(\theta1) + 2 \times dv \times SIN(\theta1)) + LI + \Delta E \qquad (17)$$

Here, Dab, $\theta1$, and Lz are the same as described below.

$$Dab=Depth\times2-(Flt-Lt)\times C$$

$$\theta1=ATAN(AVL/AL)=ATAN(AVL/(VC/TAN(AFOV/2)))$$

$$Lz=LD-LI$$

In the second embodiment, the correcting arithmetic operation unit 153 performs the correcting arithmetic operation using Expression (17) instead of Expression (16).

[Summary of Second embodiment]

According to the aforementioned embodiment, the distance information acquisition device 10 further includes the correction value storage unit and stores the correction value obtained as the result of calibration. Specifically, the correction value may be information on a difference between the result obtained by actually measuring the distance to the object OB and the distance information for the object calculated by the arithmetic operation unit 15. The arithmetic operation unit 15 calculates the distance information for the object OB on the basis of the correction value stored in the correction value storage unit. Accordingly, according to the present embodiment, it is possible to measure the distance to an object with high accuracy in consideration of an error based on a waveform distortion of pulse light emitted from the irradiation unit 11 such as VCSEL.

In the second embodiment, since the correction value is added to Expression (16), an accurate distance can be calculated even when the object OB has not a predetermined shape and when the object OB is located at a position other than a screen center, which is different particularly from the related art.

In the aforementioned description, the distance information acquisition device 10 preforms calibration to correct an error based on a waveform distortion. However, the error to be corrected through the calibration may not be based on the waveform distortion. Examples of an error other than the error based on a waveform distortion include an individual assembly error such as an attachment position or an angle of the irradiation unit 11 or the ToF sensor 13 and an error based on an environment such as temperature at which the distance information acquisition device 10 is used. In the second embodiment, it is possible to correct various errors specific to individuals by performing the calibration for each distance information acquisition device 10.

[Third embodiment]

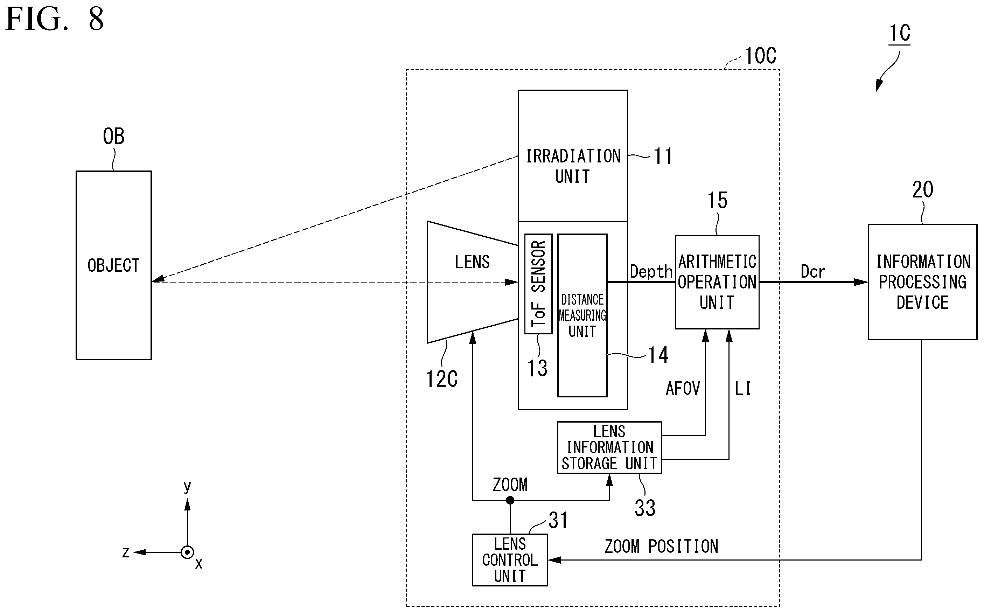

A third embodiment will be described below with reference to FIG. 8. The third embodiment is an embodiment in which a zoom lens is considered. In the aforementioned embodiment, the distance information acquisition device 10 calculates a correcting arithmetic operation on the basis of the arithmetic expression F including static parameters PM such as an angle of view AFOV and an entrance pupil position LI. The lens 12 is based on the premise of a single focal length lens in which the angle of view AFOV, the entrance pupil position LI, or the like is fixed. The third embodiment is different from the aforementioned embodiment in that an arithmetic operation is performed in consideration of a zoom lens.

FIG. 8 is a diagram illustrating the functional configuration of a distance information acquisition system according to the third embodiment. A distance information acquisition system 1C will be described below with reference to the drawing. The distance information acquisition system 1C is different from the distance information acquisition system 1 in that a distance information acquisition device 10C is provided instead of the distance information acquisition device 10. In description of the distance information acquisition system 1C, the same constituents as in the distance information acquisition system 1 will be referred to by the same reference signs, and a description thereof may be omitted.

In the distance information acquisition device 10C, a lens 12C which is a zoom lens of which a focal distance is changeable is used instead of the lens 12 which is a single focal length lens. The distance information acquisition device 10C further includes a lens control unit 31 and a lens information storage unit 33. The lens control unit 31 controls a magnification of the lens 12C in accordance with an instruction of a zoom position form the information processing device 20. The lens control unit 31 controls the focal distance (the magnification) of the lens 12C through automatic control or manual control. The lens control unit 31 outputs information on the focal distance of the lens 12C to the lens information storage unit 33. In the lens information storage unit 33, the focal distance of the lens 12C and an angle of view corresponding to the focal distance are stored in correlation. Specifically, the lens information storage unit 33 stores array data corresponding to the angle of view AFOV and the entrance pupil position L1. The array data is based on specifications of the lens 12C, a zoom position signal, a magnitude of an effective area of the ToF sensor 13, and the like. The angle of view AFOV stored in the lens information storage unit 33 is the vertical AFOV when the irradiation unit 11 is deviated vertically from the optical axis of the lens and is the horizontal AFOV when the irradiation unit 11 is deviated horizontally from the optical axis. The array data includes values of the angle of view AFOV and the entrance pupil position LI at predetermined intervals. The predetermined interval may be an interval obtained by dividing a zooming magnification between a wide-angle end and a telephoto end into arbitrary sections out of zooming magnifications which can be set in the lens 12C. For example, in a zoom lens with a zooming magnification of 2 of which the focal distance ranges from 8 [mm] to 16 [mm], when a value of the zoom signal indicating a zoom position is 8 [BIT] and the zoom lens has 256 resolution with 8 [mm] as 0 or 16 [mm] as 255, the lens information storage unit 33 stores 256 angles of view AFOV and 256 entrance pupil positions LI. The lens information storage unit 33 outputs the angle of view AFOV and the entrance pupil position LI corresponding to the zoom position to the arithmetic operation unit 15 whenever the magnification changes by the lens control unit 31.

In the following description, the lens information storage unit 33 is also referred to as an angle-of-view information storage unit. The lens information storage unit 33 outputs information on the lens at the corresponding focal distance (specifically, the angle of view AFOV and the entrance pupil position LI) to the arithmetic operation unit 15 on the basis of information on the focal distance of the lens 12C from the lens control unit 31. The correcting arithmetic operation unit 153 calculates distance information of the object OB on the basis of the angle of view or the like (specifically, AFOV and LI) corresponding to the focal distance of the lens 12C. More specifically, the correcting arithmetic operation unit 153 substitutes the angle of view AFOV and the entrance pupil position LI corresponding to the zoom position output from the lens information storage unit 33 as dynamic parameters into Expression (16) or Expression (17) and calculates the post-correction distance as Dcr.

When the lens 12C is a zoom lens of which the zoom position can be electrically changed (that is, in case of automatic control), the lens control unit 31 outputs a zoom signal indicating the zoom position to the lens 12C. When the zoom signal is output from the lens control unit 31 to the lens 12C, the lens 12C is set to the focal distance corresponding to the zoom position. When the lens 12C is a zoom lens of which the zoom position can be manually changed (that is, in case of manual control), the zoom position is manually input via the information processing device 20, and the lens control unit 31 acquires the zoom position from the information processing device 20.

[Summary of Third embodiment]

According to the aforementioned embodiment, the lens 12C may be a zoom lens of which the focal distance is changeable. The distance information acquisition device 10C further includes the lens information storage unit 33 and stores the focal distance of the lens 12C and the angle of view corresponding to the focal distance in correlation. The arithmetic operation unit 15 of the distance information acquisition device 10C calculates the distance information for the object OB on the basis of the angle of view corresponding to the focal distance of the lens 12C. Accordingly, according to the present embodiment, even when the lens 12C is a zoom lens and the zoom position is changeable, it is possible to measure the distance to an object with high accuracy.

[Fourth embodiment]

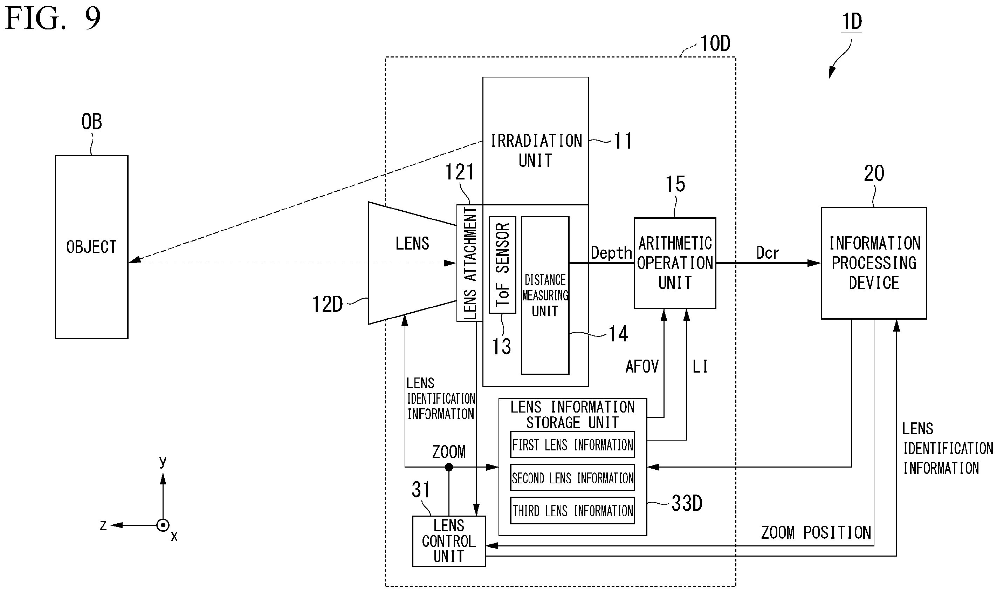

A fourth embodiment will be described below with reference to FIG. 9. The fourth embodiment is an embodiment in which an interchangeable lens is considered. In the aforementioned embodiment, a single focal length lens or a zoom lens is fixed. However, in actual use, an interchangeable lens may be used. When an interchangeable lens is used, lenses with different focal distance ranges can be attached, which further enhances versatility. Therefore, the fourth embodiment is different from the other embodiments in that an interchangeable lens (which includes both a single focal length lens and zoom lens) can be used.

FIG. 9 is a diagram illustrating the functional configuration of a distance information acquisition system according to the fourth embodiment. A distance information acquisition system 1D will be described below with reference to the drawing. The distance information acquisition system 1D is different from the distance information acquisition system 1C in that a distance information acquisition device 10D is provided instead of the distance information acquisition device 10C. In a description of the distance information acquisition system 1D, the same constituents as in the distance information acquisition system 1C will be referred to by the same reference signs, and a description thereof may be omitted.

In the distance information acquisition device 10D, an interchangeable lens at which one of a plurality of lenses is attached is used. In the illustrated example, the interchangeable lens is referred to as a lens 12D. The lens 12D is attached to the distance information acquisition device 10D via a lens attachment 121. For example, the lens attachment 121 includes an electronic contact on a lens mount and is configured to acquire lens identification information from the lens. The lens control unit 31 further includes a lens identification information acquiring unit (not illustrated) and acquires lens identification information from the lens 12D via the lens attachment 121. The lens identification information identifies a type of an optical-system lens attached thereto. The lens identification information identifies a lens, for example, on the basis of a model number of the lens. The lens control unit 31 outputs the acquired lens identification information to the information processing device 20.

The distance information acquisition device 10D includes a lens information storage unit 33D instead of the lens information storage unit 33. The lens information storage unit 33D stores a focal distance (a zoom signal) and an angle of view AFOV and an entrance pupil position LI based on the focal distance in correlation according to model numbers of a plurality of lenses. The lens information storage unit 33D may store information such as a lens thickness which varies depending on lenses and the reflectance of glass of each lens. The arithmetic operation unit 15 acquires information on the angle of view AFOV and the entrance pupil position LI corresponding to the focal distance of the lens 12D which is identified on the basis of the lens identification information acquired by the lens identification information acquiring unit from the lens information storage unit 33D and calculates distance information for an object OB on the basis of the acquired angle of view.

There may be no electronic contact depending on an attachment type which is supported by the lens attachment 121. For example, most of C-mount lenses may not include an electronic contact. When there is no electronic contact, a model number of a lens cannot be acquired from the lens 12D. Accordingly, regarding a lens of which a model number cannot be acquired, the model number of an attached lens may be input in correlation with an index number by the information processing device 20 and may be transmitted to the lens identification information acquiring unit of the lens control unit 31.

The lens information storage unit 33D may acquire information on the angle of view AFOV and the entrance pupil position LI which are different depending on lenses from the information processing device 20. The lens information storage unit 33D may store information on a plurality of lenses (for example, N types of lenses) which are interchangeable. In the illustrated example, information on three different lenses is stored as first lens information, second lens information, and third lens information. For example, indices 1 to 3 may be allocated to these three memory areas, and the index number may be designated and written when lens data is written from the information processing device 20. When writing ends, the index number corresponding to the lens attached to the lens attachment 121 may be designated by the information processing device 20. When the lens 12D is replaced with a lens other than the currently attached lens, the angle of view AFOV and the entrance pupil position LI are changed to correspond to the interchanged lens (a zoom position of the lens when the lens is a zoom lens), and the arithmetic operation unit 15 performs an arithmetic operation based on Expression (16) or Expression (17) and acquires the corrected distance Dcr.

When correction is performed more strictly, Dab in Expression (16) or Expression (17) may be calculated from the propagation time Lt from the entrance pupil position LI of the lens to the light receiving surface of the ToF sensor 13 as in Expression (6). Lt is calculated from the thickness Lk and the reflectance Lr of the lens 12D as expressed in Expression (2). Accordingly, Lk and Lr can also be used as dynamic parameters of the interchangeable lens.

[Summary of fourth embodiment]

According to the aforementioned embodiment, the lens 12D may be an interchangeable lens to which one of a plurality of lenses is attached. The lens control unit 31 further includes the lens identification information acquiring unit (not illustrated) and identifies the attached lens 12D. The lens identification information acquiring unit may acquire lens identification information of the lens 12D via the electronic contract or may acquire the lens identification information through a user's operation. The lens information storage unit (the angle-of-view information storage unit) 33D stores a focal distance and an angle of view AFOV and an entrance pupil position LI corresponding to the focal distance in correlation for each of the plurality of lenses 12D which are interchangeable lenses. The arithmetic operation unit 15 acquires the angle of view AFOV and the entrance pupil position LI corresponding to the focal distance of the lens identified on the basis of the lens identification information acquired by the lens identification information acquiring unit from the lens information storage unit 33D and calculates the distance information for the object OB on the basis of the acquired angle of view. Accordingly, according to the present embodiment, even when the lens 12D is an interchangeable lens and is interchanged with another lens, it is possible to measure the distance to an object with high accuracy.

[Fifth embodiment]

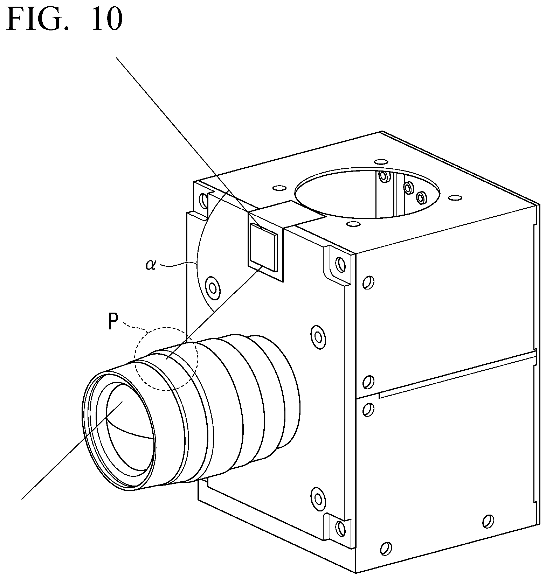

A fifth embodiment will be described below with reference to FIGS. 10 to 14. First, a problem to be solved in the fifth embodiment will be described. As described above in the fourth embodiment, according to the present embodiment, a plurality of different types of zoom lenses can be used. Here, body lengths of zoom lenses vary depending on the lenses. In general, since a zoom lens includes many constituent lenses, the shape is likely to be elongated, and there is a problem that that light emitted from the irradiation unit 11 collides with a barrel of the lens when the irradiation unit 11 is fixed to the lens attachment 121.

FIG. 10 is a diagram illustrating a problem to be solved by a distance information acquisition device according to the fifth embodiment. A problem to be solved by the distance information acquisition device 10E according to the fifth embodiment will be described below in detail with reference to the drawing. As illustrated in the drawing, when light at an angle $\alpha$ is emitted from the irradiation unit, the barrel of the lens may enter the irradiation angle to block light depending on a certain type of a zoom lens. In the illustrated example, the barrel of the lens enters the irradiation angle at the position P to block light. In this case, there is a problem that an object OB is present in the irradiation angle range, but light does not reach the object and the distance cannot be correctly measured. Accordingly, an objective of the fifth embodiment is to solve such a problem.

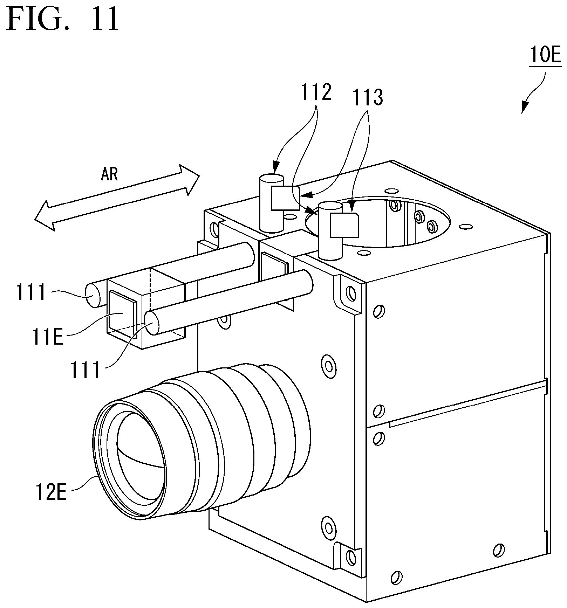

FIG. 11 is a diagram illustrating a configuration of the distance information acquisition device according to the fifth embodiment. An example of the configuration of the distance information acquisition device 10E will be described below with reference to the drawing. In description of the distance information acquisition device 10E, the same constituents as in the distance information acquisition device 10 will be referred to by the same reference signs, and a description thereof may be omitted. The distance information acquisition device 10E includes an irradiation unit 11E instead of the irradiation unit 11 and a lens 12E instead of the lens 12. The lens 12E is an example of a lens of which the barrel is long in the optical axis direction. The irradiation unit 11E is configured to be slidable in the optical axis direction (a direction indicated by a bidirectional arrow). When the irradiation unit 11E moves in the optical axis direction of the lens 12E, the distance between the irradiation unit 11E and the ToF sensor 13 changes. Examples of a mechanism for allowing the irradiation unit 11E to slide in the optical axis direction include a rod 111, a set screw 112, and a lever 113. As illustrated in the drawing, the irradiation unit 11E is held by two rods 111. The irradiation unit 11E moves in the optical axis direction along the rods 111. The position of the irradiation unit 11E is fixed by the set screw 112 and the lever 113.

Dimensional scales may be added to the two rods 111 like a ruler. A user can understand to what extent the irradiation unit 11E is moved with reference to the scales. The scales may be, for example, the distance from the light receiving surface of the ToF sensor 13 to the emission surface of the irradiation unit 11E.

When the irradiation unit 11E is moved in the optical axis direction, it is conceivable that the flexible cable FL limit the movable range of the irradiation unit 11E. Accordingly, it is preferable that the length of the flexible cable FL be set to a fixed length with a slight margin such that the cable is not pulled when the irradiation unit 11E is moved to a foremost position (that is, a position farthest from the light receiving surface of the ToF sensor 13) by the rods 111.

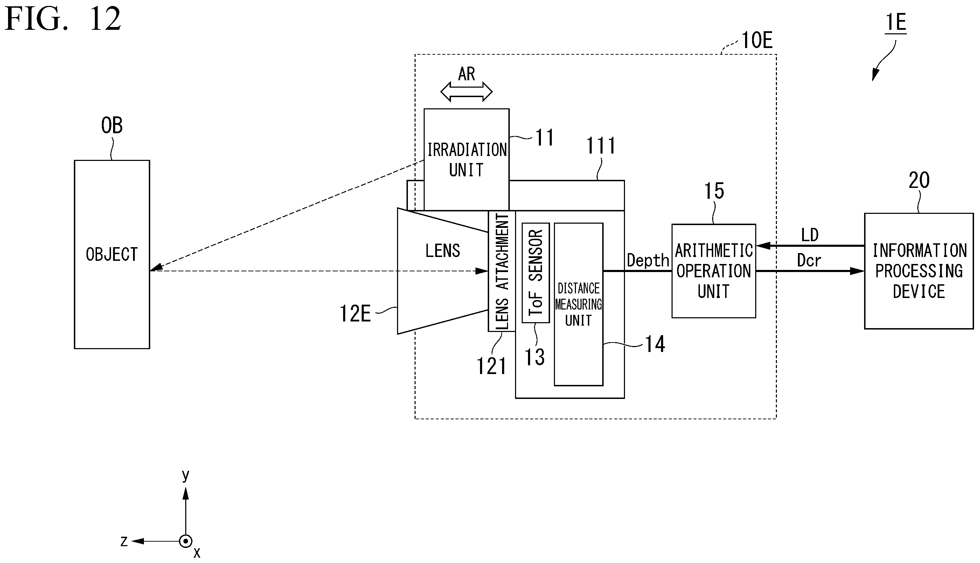

FIG. 12 is a diagram illustrating a functional configuration of the distance information acquisition device according to the fifth embodiment. The functional configuration of the distance information acquisition device 10E will be described below in more detail with reference to the drawing. A user moves the irradiation unit 11E in a direction of an arrow AR to a position at which light from the irradiation unit 11E is not blocked by the lens 12E along a length in the optical axis direction of the lens 12E. After having moved the irradiation unit 11E to an appropriate position, the user fixes the position of the irradiation unit 11E by operating the set screw 112 and the lever 113. After having fixed the position of the irradiation unit 11E, the user reads scales added to the rods 111 and inputs the read value of the scales and the model number of the lens 12E at that time to the information processing device 20.

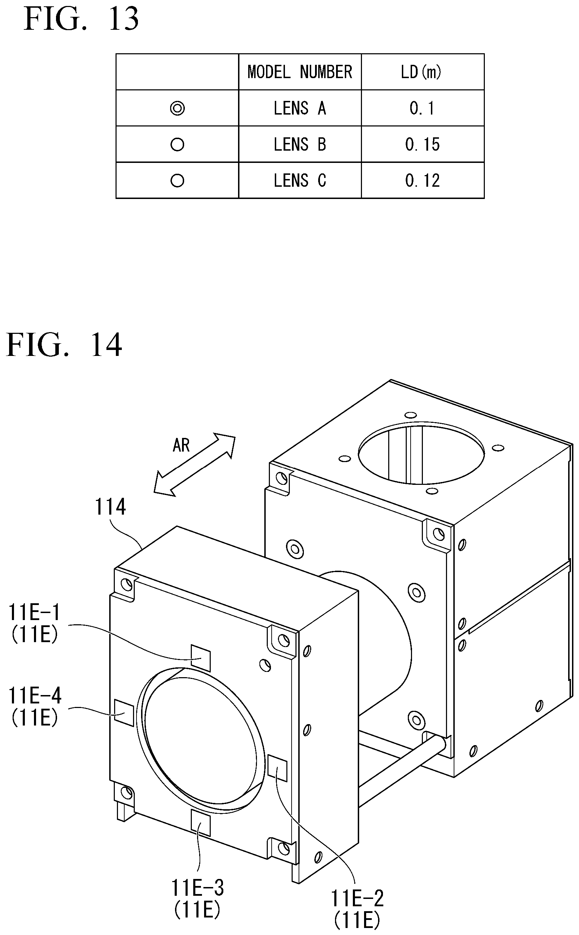

The information processing device 20 stores an LD value for each lens 12E and stores the model number and the LD value of the lens 12E in correlation. The information processing device 20 ascertains the length of LD on the basis of the input value of scales and the model number of the lens 12E at that time. The model number of the lens 12E and the LD value corresponding to the lens 12E are displayed, for example, on a display unit (not illustrated) of the information processing device 20 as illustrated in FIG. 13. For example, the user may be allowed to select a radio button (the left column in the drawing). Referring back to FIG. 12, the information processing device 20 outputs the LD value of the selected lens to the arithmetic operation unit 15. The arithmetic operation unit 15 acquires a corrected distance Dcr by substituting the LD value acquired from the information processing device 20 as a dynamic parameter into Expression (16) or Expression (17). In other words, the arithmetic operation unit 15 calculates distance information for an object OB on the basis of the distance between the irradiation unit 11E and the ToF sensor 13 acquired from the information processing device 20.

In the aforementioned example, the LD value for each lens 12E is stored in the information processing device 20, but the LD value may be stored in a memory such as an EEPROM (not illustrated) provided in the distance information acquisition device 10E. In this case, a configuration may be employed such that the selection illustrated in FIG. 13 is possible on a menu screen of the information processing device 20 or the distance information acquisition device 10E.

FIG. 14 is a diagram illustrating the configuration of a modified example of the distance information acquisition device according to the fifth embodiment. The configuration of a modified example of the distance information acquisition device 10E will be described below with reference to the drawing. The modified example of the distance information acquisition device 10E is different from the distance information acquisition device 10E, in that an irradiation unit 114 is provided. The modified example of the distance information acquisition device 10E is an example in which a plurality of irradiation units 11E are provided. In this case, the plurality of irradiation units 11E are provided in the irradiation unit 114. In the illustrated example, irradiation units 11E-1 to 11E-4 are provided as an example of a plurality of irradiation units 11E. For example, the irradiation units 11E-1 to 11E-4 are disposed vertically and horizontally with respect to the optical axis of the lens 12E. By allowing members surrounding the lens as the irradiation units 114 to slide, it is possible to solve a problem such as torsion which may be caused by allowing the irradiation unit 11E to slide alone. When tilting is curbed by the vertical and horizontal arrangement, it cannot be said that an object to which the distance is to be measured be necessarily located at the optical axis center. When an object is not located at the optical axis center, the distance from emission of light from the irradiation unit to reflection of light by the object and the distance from reflection of light by the object and to incidence of light on the light receiving surface are different, which can be corrected using Expression (16) or Expression (17).

[Summary of Fifth embodiment]

According to the aforementioned embodiment, the distance between the emission surface of the irradiation unit 11E and the light receiving surface of the ToF sensor 13 changes by allowing the irradiation unit 11E to move in the optical axis direction of the lens 12E. The arithmetic operation unit 15 calculates distance information for the object OB on the basis of the changing distance between the emission surface of the irradiation unit 11E and the light receiving surface of the ToF sensor 13. Accordingly, according to the present embodiment, by allowing the irradiation unit 11E to slide even when a lens 12E with a long barrel is attached as the interchangeable lens, it is possible to solve the problem that the irradiation angle of the irradiation unit 11E is blocked by the lens 12E and to measure the distance to an object OB with high accuracy.

[Sixth embodiment]

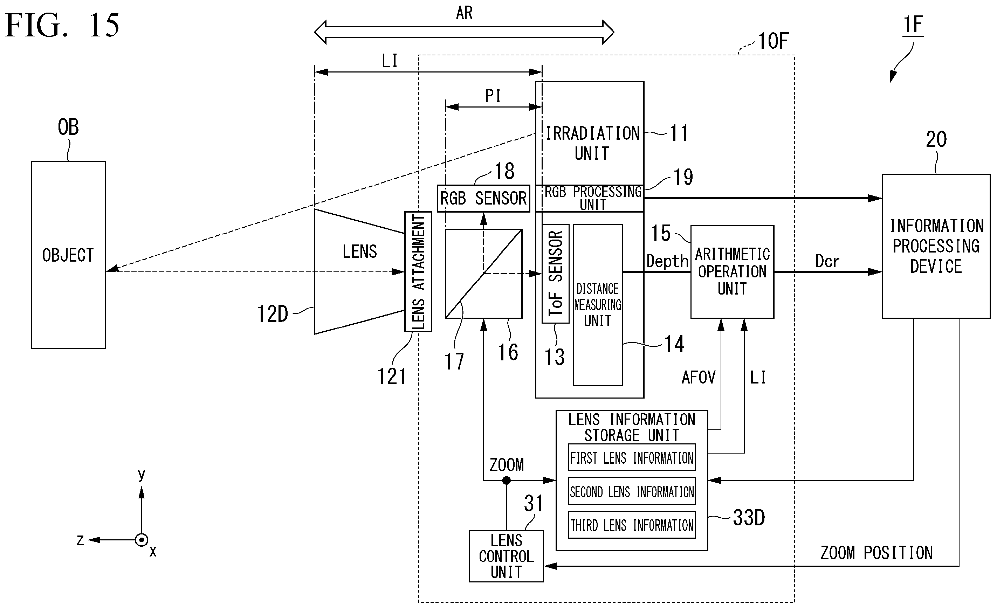

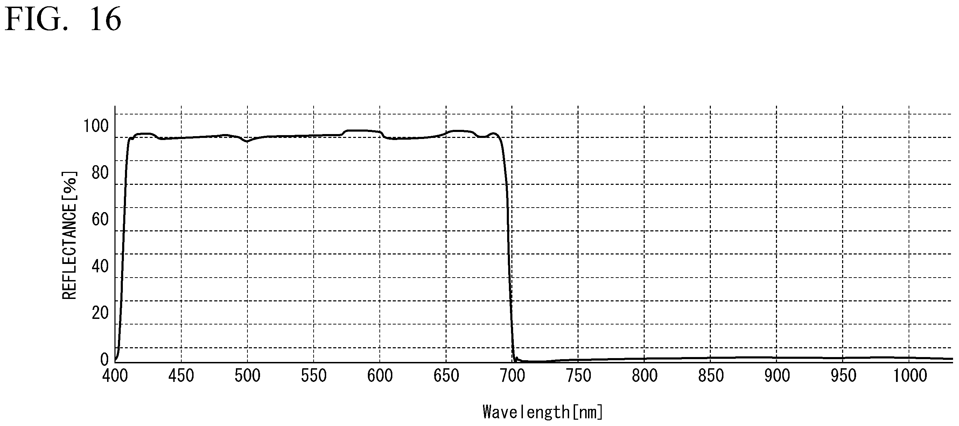

A sixth embodiment will be described below with reference to FIGS. 15 and 16. The sixth embodiment is an embodiment in which an RGB image can be additionally acquired. In the present embodiment, the ToF sensor 13 and an RGB sensor 18 are disposed substantially on the same optical axis.

FIG. 15 is a diagram illustrating the functional configuration of a distance information acquisition device according to the sixth embodiment. The functional configuration of a distance information acquisition device 10F will be described below with reference to the drawing. A distance information acquisition system 1F illustrated in the drawing a modified example of the distance information acquisition system 1D. The distance information acquisition system 1F is different from the distance information acquisition system 1D in that a distance information acquisition device 10F is provided instead of the distance information acquisition device 10D. The distance information acquisition device 10F is different from the distance information acquisition device 10D, in that a prism 16, a visible light reflecting dichroic film 17, an RGB sensor 18, and an RGB processing unit 19 are additionally provided. In description of the distance information acquisition system 1F, the same constituents as in the distance information acquisition system 1D will be referred to by the same reference signs, and a description thereof may be omitted.

The prism 16 is provided between the lens attachment 121 and the ToF sensor 13. Light from the lens 12D is incident on the prism 16. The light incident on the prism 16 is emitted to one of the ToF sensor 13 and the RGB sensor 18.

The visible light reflecting dichroic film 17 reflects visible light and transmits light (that is, infrared light) of a wavelength exceeding an infrared range. Visible light of the light incident on the prism 16 is reflected in a direction in which the RGB sensor 18 is provided by the visible light reflecting dichroic film 17 and is incident on the RGB sensor 18. Infrared light of the light incident on the prism 16 is transmitted by the visible light reflecting dichroic film 17 and is incident on the ToF sensor 13. Here, visible light and infrared light pass along substantially the same optical axis between the lens 12D and the visible light reflecting dichroic film 17.

FIG. 16 is a diagram illustrating an example of reflective spectral characteristics of the visible light reflecting dichroic film according to the sixth embodiment. An example of reflective spectral characteristics of the visible light reflecting dichroic film 17 will be described below. The horizontal axis in the drawing represents a wavelength [nm (nanometer)], and the vertical axis represents a reflectance [%] corresponding to the wavelength. As illustrated in the drawing, the visible light reflecting dichroic film 17 has a reflectance of substantially 100 [%] when the wavelength is equal to or less than about 700 [nm] and has a reflectance of substantially 0 [%] when the wavelength is equal to or greater than about 700 [nm]. That is, out of light incident on the visible light reflecting dichroic film 17, light (for example, visible light) of a wavelength equal to or less than about 700 [nm] is reflected, and light (for example, infrared light) of a wavelength equal to or greater than about 700 [nm] is transmitted.

The configuration of the RGB sensor 18 and the RGB processing unit 19 for generating an RGB image will be described below with reference back to FIG. 15.

The RGB sensor 18 includes a plurality of pixels which are two-dimensionally arranged, and each pixel receives visible light. The RGB sensor 18 may specifically be an image sensor in which color pixels of RGB are arranged in a Bayer array. Each pixel of the RGB sensor 18 outputs information on an intensity of light received thereby to the RGB processing unit 19.

The RGB processing unit 19 acquires information on intensities of light in the two-dimensionally arranged pixels from the RGB sensor 18. The RGB processing unit 19 generates an RGB image on the basis of the acquired information. The RGB processing unit 19 outputs the generated RGB image to the information processing device 20.

Here, the distance between an entrance pupil position of a lens and the light receiving surface of the ToF sensor 13 is defined as LI. The distance from an incidence end of the prism 16 to an emission end to the ToF sensor 13 is defined as PI. In this case, a part for calculating Lt in Expression (16) is replaced with Expression (18) instead of Expression (2).

$$Lt=(LI-Lk-PI)/C+Lk/C \times Lr+PI/C \times Lp \qquad \ldots(18)$$

Here, Lk denotes a total thickness of glass in the lens 12D, Lr denotes a reflectance of glass in the lens 12D, PI denotes an optical path length of the prism 16, and Lp denotes a reflectance of material of the prism 16.

The correcting arithmetic operation unit 153 of the distance information acquisition device 10F can acquire a corrected distance Dcr by using Lt calculated through Expression (18) to calculate Dab which is input to Expression (16) or Expression (17).

[Summary of Sixth embodiment]

According to the aforementioned embodiment, since the prism 16, the visible light reflecting dichroic film 17, the RGB sensor 18, and the RGB processing unit 19 are additionally provided, an RGB image can be acquired. Out of light incident on the lens 12D, visible light for generating an RGB image and infrared light for generating a distance image pass along the same optical axis. According to the present embodiment, by performing a correcting arithmetic operation using Expression (18), it is possible to measure the distance to an object OB with high accuracy even when the prism 16 is used. Accordingly, according to the present embodiment, it is possible to minimize a deviation of the optical axis between a distance space and an RGB space and it is not necessary to perform complicated position alignment at the time of synchronization of an image of distance data and RGB data in the after-process, for example, generation of point group data including RGB information. As a result, according to the present embodiment, it is possible to much reduce the time required for complicated position alignment between images of distance data and RGB data in the after-process.

[Seventh embodiment]

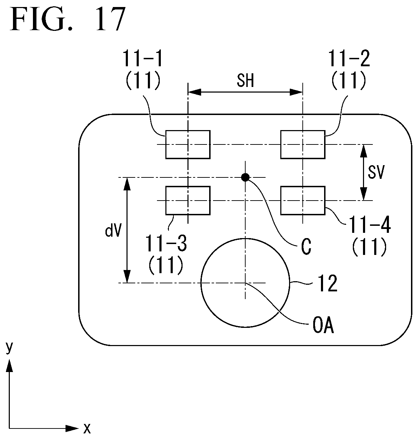

A seventh embodiment will be described below with reference to FIG. 17. In measuring a distance using a ToF system, necessary intensity of light varies depending on the distance to be measured. When the distance to be measured is small, distance measurement can be satisfactorily performed using only one irradiation unit 11. On the other hand, when the distance to be measured is large, a plurality of irradiation units 11 may be necessary depending on the length of the distance to be measured. Therefore, in the seventh embodiment, a correcting arithmetic operation when a plurality of irradiation units 11 are provided will be described.

FIG. 17 is a diagram illustrating an example of arrangement of a lens and irradiation units which are provided in a distance information acquisition device 10 according to the seventh embodiment. In the illustrated example, irradiation units 11-1 to 11-4 are used as the irradiation unit 11. The irradiation units 11-1 to 11-4 are arranged in parallel in two lines above the optical axis OA. A gap in the horizontal direction between two irradiation units 11 is referred to as SH, and a gap in the vertical direction is referred to as SV.

In this case, the correcting arithmetic operation unit 153 sets dv and dh in Expression (16) using a mid-point coordinate of positions of the plurality of irradiation units 11. In the illustrated example, dv and dh in Expression (16) are set with an intersection C of positions of Sh/2 and SV/2 of the mid points of the horizontal gap and the vertical gap as the mid-point coordinate of four irradiation units 11.

[Summary of seventh embodiment]

According to the aforementioned embodiment, a plurality of irradiation units 11 are used. The correcting arithmetic operation unit 153 considers a mid point between a plurality of irradiation units as the position of the irradiation unit 11 and uses a gap between the mid point and the optical axis OA as dv and dh. Accordingly, according to the present embodiment, it is possible to perform a correcting arithmetic operation with a simple arithmetic operation even when a plurality of irradiation units 11 are used.

While embodiments of the present invention have been described above, the present invention is not limited to the embodiments, and various modifications may be added thereto without departing from the gist of the present invention. The aforementioned embodiments may be appropriately combined.

INDUSTRIAL APPLICABILITY

According to the present invention, it is possible to measure the distance to an object with high accuracy.

REFERENCE SIGNS LIST

    1 Distance information acquisition system
    10 Distance information acquisition device
    11 Irradiation unit
    111 Rod
    112 Set screw
    113 Lever
    114 Irradiation unit
    12 Lens
    121 Lens attachment
    13 ToF sensor
    14 Distance measuring unit
    15 Arithmetic operation unit
    151 Distance value acquiring unit
    152 Storage unit
    153 Correcting arithmetic operation unit
    16 Prism
    17 Visible light reflecting dichroic film
    18 RGB sensor
    19 RGB processing unit
    20 Information processing device
    31 Lens control unit

33 Lens information storage unit
PM Static parameter
F Arithmetic expression
LP Emission pulse
OB Object
WC White chart
OA Optical axis
SB1 First substrate
SB2 Second substrate
FL Flexible cable
DI Distance image
9 ToF camera system
90 ToF camera device
91 Irradiation unit
92 Lens
93 ToF sensor
94 Distance measuring unit
95 Information processing device

**Claims**

1. A distance information acquisition device (10) that includes an irradiation unit (11) configured to irradiate an object with light and a time of flight (ToF) sensor (13) configured to receive light emitted from the irradiation unit and reflected by the object via an optical-system lens and acquires distance information for the object, the distance information acquisition device comprising:

   a distance value acquiring unit (151) configured to acquire a distance value on the basis of a timing at which emission of light is performed by the irradiation unit, a timing at which light is received by the ToF sensor, and the speed of light;
   a storage unit (152) configured to store a predetermined numerical expression including at least information on an angle of view of the optical-system lens as a parameter; and
   a correcting arithmetic operation unit (153) configured to calculate the distance information for the object by applying the acquired distance value to the predetermined numerical expression stored in the storage unit.

2. The distance information acquisition device according to claim 1, further comprising a correction value storage unit configured to store information on a difference between an actual measurement result of a distance to the object and the distance information for the object calculated by the correcting arithmetic operation unit as a correction value, wherein the correcting arithmetic operation unit calculates the distance information for the object on the basis of the correction value stored in the correction value storage unit.

3. The distance information acquisition device according to claim 1, wherein the optical-system lens is a zoom lens of which a focal distance is changeable,

   wherein the distance information acquisition device further comprises an angle-of-view information storage unit (33D) configured to correlate and store a focal distance of the optical-system lens and an angle of view corresponding to the focal distance, and
   wherein the correcting arithmetic operation unit calculates the distance information for the object on the basis of the angle of view corresponding to the focal distance of the optical-system lens.

4. The distance information acquisition device according to claim 1, wherein the optical-system lens is an interchangeable lens to which one of a plurality of lenses is attached,

   wherein the distance information acquisition device further comprises:

   a lens identification information acquiring unit configured to acquire lens identification information for identifying the attached optical-system lens; and
   an angle-of-view information storage unit (33D) configured to correlate and store a focal distance of the optical-system lens and an angle of view corresponding to the focal distance,

wherein the angle-of-view information storage unit correlates and stores a focal distance and an angle of view corresponding to the focal distance for each of the plurality of lenses, and

wherein the correcting arithmetic operation unit acquires an angle of view of a focal distance of a lens which is identified on the basis of the lens identification information acquired by the lens identification information acquiring unit and calculates the distance information for the object on the basis of the acquired angle of view.

5. The distance information acquisition device according to any one of claims 1 to 4, wherein a distance between the irradiation unit and the ToF sensor is changed by allowing the irradiation unit to move in an optical axis direction of the optical-system lens, and

wherein the correcting arithmetic operation unit calculates the distance information for the object on the basis of the distance between the irradiation unit and the ToF sensor.

6. The distance information acquisition device according to any one of claims 1 to 4, further comprising:

a prism (16) which is provided between the optical-system lens and the ToF sensor and on which light emitted from the irradiation unit to the object and reflected by the object is incident;

a visible light reflecting dichroic film (17) configured to reflect visible light out of light incident on the prism; and

an RGB sensor (18) configured to receive the visible light reflected by the visible light reflecting dichroic film.

7. The distance information acquisition device according to claim 6, wherein the correcting arithmetic operation unit calculates the distance information for the object additionally on the basis of a thickness and a reflectance of glass of the prism.

# FIG. 1

EP 4 641 251 A1

# FIG. 2

# FIG. 3

# FIG. 4

# FIG. 5

(A)                    (B)

CAMERA VIEWPOINT DIRECTION

# FIG. 6

EP 4 641 251 A1

# FIG. 7

FIG. 8

EP 4 641 251 A1

FIG. 9

EP 4 641 251 A1

FIG. 10

FIG. 11

FIG. 12

EP 4 641 251 A1

## FIG. 13

|  | MODEL NUMBER | LD (m) |
|---|---|---|
| ◎ | LENS A | 0.1 |
| ○ | LENS B | 0.15 |
| ○ | LENS C | 0.12 |

## FIG. 14

FIG. 15

FIG. 16

EP 4 641 251 A1

FIG. 17

FIG. 18

FIG. 19

(A)

(B)

# FIG. 20

# INTERNATIONAL SEARCH REPORT

International application No.

**PCT/JP2023/023468**

| A. | CLASSIFICATION OF SUBJECT MATTER |
|---|---|

*G01S 7/481*(2006.01)i; *G01C 3/06*(2006.01)i; *G01S 7/497*(2006.01)i; *G01S 17/10*(2020.01)i; *G02B 7/40*(2021.01)i; *G03B 17/14*(2021.01)i; *H04N 23/60*(2023.01)i

FI: G01S7/481 A; G01C3/06 120Q; G02B7/40; G03B17/14; H04N23/60 500; G01S7/497; G01S17/10

According to International Patent Classification (IPC) or to both national classification and IPC

| B. | FIELDS SEARCHED |
|---|---|

Minimum documentation searched (classification system followed by classification symbols)

G01S7/48 - G01S7/51; G01S17/00 - G01S17/95; G01C3/00 - G01C3/32; G01B11/00 - G01B11/30; G02B7/40; G03B17/14; H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-12136 A (RICOH CO., LTD.) 04 February 2021 (2021-02-04) paragraphs [0020]-[0059], fig. 3-8 | 1 |
| Y | | 3-5 |
| A | | 2, 6-7 |
| Y | JP 2007-267063 A (YAMAHA CORPORATION) 11 October 2007 (2007-10-11) paragraphs [0012]-[0024], fig. 1-5 | 3, 5 |
| A | | 2, 6-7 |
| Y | JP 2013-174719 A (NIKON CORPORATION) 05 September 2013 (2013-09-05) paragraphs [0008]-[0018], [0034], fig. 1, 2 | 4-5 |
| A | | 2, 6-7 |
| Y | JP 2022-168742 A (CANON KABUSHIKI KAISHA) 08 November 2022 (2022-11-08) paragraphs [0015], [0032], fig. 1 | 5 |
| A | | 2, 6-7 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/023468**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-184483 A (KYOCERA CORPORATION) 24 October 2019 (2019-10-24)<br>      entire text, all drawings | 1-7 |
| A | CN 111158006 A (WEIYUAN PHOTON (SHENZHEN) TECHNOLOGY CO., LTD.) 15 May 2020 (2020-05-15)<br>      entire text, all drawings | 1-7 |

Form PCT/ISA/210 (second sheet) (January 2015)

**INTERNATIONAL SEARCH REPORT**
Information on patent family members

International application No.

**PCT/JP2023/023468**

| Patent document cited in search report | | | Publication date (day/month/year) | Patent family member(s) | | | Publication date (day/month/year) |
|---|---|---|---|---|---|---|---|
| JP | 2021-12136 | A | 04 February 2021 | (Family: none) | | | |
| JP | 2007-267063 | A | 11 October 2007 | (Family: none) | | | |
| JP | 2013-174719 | A | 05 September 2013 | (Family: none) | | | |
| JP | 2022-168742 | A | 08 November 2022 | WO paragraphs [0015], [0032], fig. 1 | 2022/230523 | A1 | |
| JP | 2019-184483 | A | 24 October 2019 | US entire text, all drawings WO EP CN | 2021/0033744 2019/198568 3779380 111954796 | A1 A1 A1 A | |
| CN | 111158006 | A | 15 May 2020 | (Family: none) | | | |

Form PCT/ISA/210 (patent family annex) (January 2015)

**EP 4 641 251 A1**

REFERENCES CITED IN THE DESCRIPTION

**Patent documents cited in the description**

- JP 2022205108 A
- JP 2021026236 A